(19) **Europäisches Patentamt / European Patent Office / Office européen des brevets**

(11) **EP 4 582 385 A1**

(12) **EUROPEAN PATENT APPLICATION**
published in accordance with Art. 153(4) EPC

(43) Date of publication:
**09.07.2025 Bulletin 2025/28**

(21) Application number: **23859450.1**

(22) Date of filing: **31.08.2023**

(51) International Patent Classification (IPC):
**C01F 7/02** *(2022.01)* **B01J 29/80** *(2006.01)*
**B01J 29/08** *(2006.01)*

(52) Cooperative Patent Classification (CPC):
**B01J 29/08; B01J 29/80; C01F 7/02**

(86) International application number:
**PCT/CN2023/116100**

(87) International publication number:
**WO 2024/046421 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 CN 202211051672**
**09.09.2022 CN 202211104668**

(71) Applicants:
- **China Petroleum & Chemical Corporation Beijing 100728 (CN)**
- **Sinopec Research Institute of Petroleum Processing Co., Ltd. Beijing 100083 (CN)**

(72) Inventors:
- **YUAN, Shuai Beijing 100083 (CN)**

- **LIU, Yuqing Beijing 100083 (CN)**
- **YAN, Jiasong Beijing 100083 (CN)**
- **YU, Shanqing Beijing 100083 (CN)**
- **LI, Jiaxing Beijing 100083 (CN)**
- **ZHANG, Jiexiao Beijing 100083 (CN)**
- **TIAN, Huiping Beijing 100083 (CN)**
- **QIU, Zhonghong Beijing 100083 (CN)**
- **LIU, Bo Beijing 100083 (CN)**

(74) Representative: **Hoffmann Eitle Patent- und Rechtsanwälte PartmbB Arabellastraße 30 81925 München (DE)**

(54) **MESOPOROUS PSEUDO-BOEHMITE HAVING HYDROXYL-RICH SURFACE, CATALYTIC CRACKING CATALYST CONTAINING PSEUDO-BOEHMITE, AND PREPARATION AND USE THEREOF**

(57) The present invention relates to a mesoporous pseudo-boehmite rich in surface hydroxyl groups and a preparation method thereof, as well as a catalytic cracking catalyst containing the mesoporous pseudo-boehmite and its preparation and application. The pseudo-boehmite has a most probable pore size greater than 4.5 nm and not more than 12 nm.

**EP 4 582 385 A1**

## Description

## Technical Field

The present invention relates to a mesoporous pseudo-boehmite rich in surface hydroxyl groups and a preparation method thereof. The present invention also relates to a catalytic cracking catalyst containing the mesoporous pseudo-boehmite as described above and a preparation method and an application method thereof.

## Background Art

The pseudo-boehmite with a chemical formula of $AlOOH \cdot nH_2O$ (0<n<1, especially 0.08-0.62) is an aluminum oxide compound with a water content greater than that of boehmite and a crystalline size smaller than that of boehmite. It is a crystal phase that is prone to be generated during the synthesis of aluminum hydroxide, wherein the crystallization is incomplete, and its typical crystal form is very thin wrinkled lamellae.

There are many methods for preparing a pseudo-boehmite, mainly including an aluminum alcoholate hydrolysis method and a precipitation method etc., and the precipitation method is divided into two categories: acid method and alkali method. The aluminum alcoholate hydrolysis method uses metallic aluminum and higher alcohols (n-pentanol, n-hexanol, isopropanol) as raw materials, the metallic aluminum reacts with the alcohol in the presence of a catalyst to form an aluminum alcoholate, and then it is hydrolyzed to obtain a pseudo-boehmite. However, this method has high production costs and complex production processes. The alkali precipitation method refers to the method of preparing a pseudo-boehmite by neutralizing and precipitating acidic aluminum salts with alkali, wherein the commonly used aluminum salts include $Al_2(SO_4)_3$, $Al(NO_3)_3$, $AlCl_3$, etc., and the commonly used alkaline precipitants include NaOH, $NH_3 \cdot H_2O$, $NaAlO_2$, $Na_2CO_3$, etc. The acid precipitation method refers to the method of preparing a pseudo-boehmite by neutralizing and precipitating alkaline aluminate with acid, wherein the alkaline aluminate is generally sodium (meta)aluminate, and the acid used can be a strong acid ($HNO_3$, $H_2SO_4$, etc.), or a weak acid ($NH_4HCO_3$, $NaHCO_3$, etc.) and $CO_2$, etc. Wherein, the $NaAlO_2$-$CO_2$ method is also known as the carbonization method. The preparation of pseudo-boehmite by carbonization method can rely on the production process of alumina by sintering method, wherein the intermediate product $NaAlO_2$ solution and waste gas $CO_2$ of aluminum plant are used as reaction raw materials. The process is simple, and the byproducts and waste liquids etc. in the production process can be returned back to the alumina production process for reuse; it is the lowest cost method for the current industrial production of pseudo-boehmite.

The pseudo-boehmite is widely used in petroleum refining and petrochemical catalysts; it is often used as a binder for catalytic cracking catalysts and a precursor for hydrogenation catalyst carriers ($\gamma$-$Al_2O_3$). Pseudo-boehmite is an important raw material in semi-synthetic catalytic cracking catalysts. Pseudo-boehmite has good bonding properties after acidification and can form a specific mesoporous structure after the preparation and formation of catalyst.

The pseudo-boehmite prepared by conventional carbonization has low crystallinity and a most probable (mode) pore size of only 3.8 nm. When prepared into a catalytic cracking catalyst, it can only provide a mesoporous structure of 3.8 nm. The molecular size of the catalytic cracking raw materials is relatively large, and its diffusion in the pores of 3.8 nm is significantly hindered. This hindering effect limits the efficient diffusion and conversion of heavy oil raw material molecules, which is not conducive to reducing coke yield and improving product distribution. At present, there is no literature reporting that the pseudo-boehmite prepared by carbonization method can provide a larger most probable pore size distribution when used in catalytic cracking catalysts; and at present, the pseudo-boehmite with a larger pore size has poor wear resistance and cannot directly form a pore structure with a larger most probable pore size after acidification.

Catalytic cracking catalysts usually include molecular sieves, binders and clay, wherein commonly used binders are bi-aluminum binders-alumina and aluminum sol. In order to increase the yield of high value-added products, catalytic cracking catalysts usually need to contain a higher content of molecular sieves, but often the increase in the content of molecular sieves will lead to a decrease in the wear resistance of the catalyst, and the molecular sieves commonly used in catalytic cracking mainly contain micropores, with fewer mesopores and macropores. Pseudo-boehmite is often used as a matrix of catalytic cracking catalysts and a precursor of hydrogenation catalyst carriers ($\gamma$-$Al_2O_3$). Pseudo-boehmite has good bonding properties after acidification, and can also form a specific mesoporous structure after the catalyst is prepared and formed; however, the strength of the catalytic cracking catalyst product obtained using existing pseudo-boehmite is low. In addition, the use of existing pseudo-boehmite often cannot obtain a larger pore size, and the most probable pore size is less than 4.5nm, and the pore structure greater than 5nm cannot be formed in the obtained catalytic cracking catalyst.

## Summary of the invention

The first technical problem to be solved by the present invention is to provide a mesoporous pseudo-boehmite with good bonding performance and rich in surface hydroxyl groups.

The second technical problem to be solved by the present invention is to provide a method for preparing the pseudo-boehmite.

The third technical problem to be solved by the present invention is to provide a method for preparing a catalytic cracking catalyst by using a pseudo-boehmite binder, wherein the catalytic cracking catalyst prepared by the method can have better wear resistance.

The fourth technical problem to be solved by the present invention is to provide a catalytic cracking catalyst prepared by the above scheme and an application method thereof.

Specifically, the present invention provides the following three sets of technical solutions A, B and C:

**Technical solution A:**

A1. A pseudo-boehmite, characterized in that the pseudo-boehmite has any one, two or three of the following characteristics (a), (b) and (c), that is, (a) alone, (b) alone, (c) alone, a combination of (a) and (b), a combination of (a) and (c), a combination of (b) and (c), a combination of (a), (b) and (c):

(a) the pseudo-boehmite has a most probable pore size greater than 4.5 nm and not more than 12 nm, for example 4.8 nm-11 nm, 5 nm-10 nm, 5.5 nm-9 nm, 6 nm-8.5 nm, 7 nm-9 nm, 5.2 nm-7.6 nm, or 5.2 nm-7.5 nm;

(b) $I_{3000-3800}$ of the pseudo-boehmite is 6.0 $cm^{-1} \cdot mg^{-1}$ -8.5 $cm^{-1} \cdot mg^{-1}$, for example, 6.2 $cm^{-1} \cdot mg^{-1}$-8.3 $cm^{-1} \cdot mg^{-1}$, $I_{3000-3800}$ represents the infrared absorption intensity of the surface hydroxyl group of the pseudo-boehmite in the infrared light wavelength range of 3000 $cm^{-1}$-3800 $cm^{-1}$, and the calculation method of $I_{3000-3300}$ is the ratio of the area of the absorption peak (in $cm^{-1}$) of the sample in the range of 3000 $cm^{-1}$ -3800 $cm^{-1}$ to the mass (in mg) of the sample; wherein, the infrared absorption intensity of the surface hydroxyl group of the sample is measured by Fourier transform infrared spectrometer, and the specific method is as follows:

after the sample is thoroughly ground, 10 mg to 20 mg of the sample is taken and pressed into a self-supporting tablet;

after being accurately weighed, the sample is transferred to the sample holder of the in-situ cell and subjected to vacuum treatment; the sample is purified under high vacuum conditions of $1.0 \times 10^{-3}$ Pa (absolute pressure) and temperature of 450°C for 2 hours;

after being purified, the mixture is cooled to room temperature, and then scanned in the range of 400 $cm^{-1}$ -4000 $cm^{-1}$ at a resolution of 4.0 $cm^{-1}$ to obtain infrared hydroxyl absorption signals;

after data processing of the absorption signal, an infrared absorption spectrum of hydroxyl group with wave number as the horizontal coordinate and absorbance as the vertical coordinate is obtained.

absorbance: the logarithm to the base 10 of the ratio of the incident light intensity before the light passes through a substance to the transmitted light intensity after the light has passed through the substance, i.e., $lg(I_0/I_1)$, wherein $I_0$ is the incident light intensity and $I_1$ is the transmitted light intensity;

(c) the ratio of crystalline size $D_{(130)}$ and $D_{(020)}$ of the pseudo-boehmite is $D_{(130)}/D_{(020)}$ = 1.0-1.5, for example, 1.1-1.4, 1.2-1.35, 1.1-1.3, or 1.13-1.26,

the crystalline size D is measured by X-ray powder diffraction (XRD) and calculated according to the Scherrer formula

$$D = \frac{K \times \lambda}{\beta \times \cos\theta}$$

, wherein K = 1.075, $\lambda$ is the wavelength of the anodic radiation K$\alpha$1 spectral line, $\beta$ is the half-peak width (in radians) of the specific diffraction peak of pseudo-boehmite, and $\theta$ is the Bragg diffraction angle of the diffraction peak (in degrees), that is, $D_{(130)}$ represents the crystalline size of the sample perpendicular to the (130) crystal plane,

$$D_{(130)} = \frac{K \times \lambda}{\beta_{130} \times \cos\theta}$$

, $\beta_{130}$ is the half-peak width of the (130) diffraction peak of sample (corresponding to $2\theta$ = 38.3°); $D_{(020)}$ represents the crystalline size of the sample perpendicular to the (020) crystal plane,

$$D_{(020)} = \frac{K \times \lambda}{\beta_{020} \times \cos\theta}$$

, $\beta_{020}$ is the half-peak width of the (020) diffraction peak of sample (corresponding to $2\theta$ = 14.1°).

A2. The pseudo-boehmite according to any of the aforementioned technical solutions, characterized in that the molecular formula of the pseudo-boehmite is $AlOOH \cdot nH_2O$, n=0.08-0.62.

A3. The pseudo-boehmite according to any of the aforementioned technical solutions, characterized in that the crystalline size of the pseudo-boehmite is $D_{(130)}$= 4 nm-10 nm, for example, 4.5 nm-9 nm, 5 nm-8.5 nm, 5.1 nm-8.5 nm, 5.5 nm-8.5 nm, 6 nm-8.2 nm, or 5.0 nm-7.9 nm.

A4. The pseudo-boehmite according to any of the aforementioned technical solutions, characterized in that the pseudo-boehmite has a crystallinity of 85%-110%, such as 88%-108%, 90%-105%, or 92%-103%.

A5. The pseudo-boehmite according to any of the aforementioned technical solutions, characterized in that the peptization index of the pseudo-boehmite is 90%-100%, such as 93%-99%, or 94-98%.

A6. The pseudo-boehmite according to any of the aforementioned technical solutions, characterized in that the pore volume of the pseudo-boehmite is 0.3 cm³/g-0.58 cm³/g, such as 0.31 cm³/g-0.52 cm³/g, 0.33 cm³/g-0.5 cm³/g, or 0.34 cm³/g-0.46 cm³/g.

A7. A method for preparing pseudo-boehmite, the method comprising the following steps:

(1) a sodium (meta)aluminate solution is reacted with $CO_2$ to form a first slurry; preferably, the molar ratio of the two, calculated as $NaAlO_2$ and $CO_2$, is in the range of 0.5 to 2 times, e.g., 0.833 to 1.2 times, or 0.9 to 1.1 times, of the theoretical equivalent ratio, i.e., if the theoretical equivalent ratio is 2:1, the actual molar ratio of the two is (1-4):1, e.g., (1.67-2.4):1, or (1.8-2.2): 1;

(2) the first slurry is aged under certain conditions, and a hydroxyl regulator is added during the aging process, wherein the hydroxyl regulator is ammonia water and/or a precursor capable of forming $NH_3$ such as urea, to obtain an aged slurry, wherein the aging temperature is 100 °C-185 °C, for example, above 100 °C and not more than 185 °C, 120 °C-180 °C, 135 °C-180 °C, 120 °C-160 °C, or 135 °C-160 °C; preferably, the aging under certain conditions is: first static aging, then aging under stirring;

(3) the aged slurry is filtered, washed, and dried.

A8. The method for preparing pseudo-boehmite according to any of the aforementioned technical solutions, characterized in that, in step (1), the pH value at the end of the reaction of the sodium (meta)aluminate solution with $CO_2$ is 8.5-10.5, for example 9.2-10.3, and the $Al_2O_3$ concentration of the sodium (meta)aluminate solution is 5 g/L-60 g/L, for example 8 g/L-45 g/L.

A9. The method for preparing pseudo-boehmite according to any of the aforementioned technical solutions, characterized in that in step (1), the conditions for the reaction of the sodium (meta)aluminate solution with $CO_2$ include: introducing a $CO_2$-containing gas with a $CO_2$ concentration of 20-100 % by volume, such as 40-100 % by volume, 30-90 % by volume, or 40-80 % by volume (the balance is an inert gas such as nitrogen) into the sodium (meta)aluminate solution for reaction, the reaction starting temperature is 10 °C-35 °C, and the reaction endpoint temperature is 15 °C-55 °C.

A10. The method for preparing pseudo-boehmite according to any of the aforementioned technical solutions, characterized in that the slurry aging temperature in step (2) is 100 °C-185 °C, for example, above 100 °C and not more than 185 °C, 120 °C-180 °C, 135 °C-180 °C, 120 °C-160 °C, or 135 °C-160 °C, the aging pressure is 0.2 MPa-1.0 MPa, and the aging time is 2-11.5 hours, for example, 2-10 hours, or 3.5-10.5 hours.

A11. The method for preparing pseudo-boehmite according to any of the aforementioned technical solutions, characterized in that in step (2), the static aging time is 1-8 hours, for example, 1-6 hours, or 2.5-6 hours, 1-4 hours, or 2-3 hours, and the aging time under stirring is 1-6 hours, for example, 1-4.5 hours; the stirring speed of the stirring aging can be 50 rpm-450 rpm, for example 50 rpm-400 rpm, 60 rpm-400 rpm, 120 rpm -450 rpm, or 150 rpm -450 rpm; preferably, the aging is constant temperature aging.

A12. The method for preparing pseudo-boehmite according to any of the aforementioned technical solutions, characterized in that the aging temperature is 100 °C-185 °C, for example, above 100 °C and not more than 185 °C, 120 °C-180 °C, 135 °C-180 °C, 120 °C-160 °C, or 135 °C-160 °C, and the aging is preferably constant temperature aging.

A13. The method for preparing pseudo-boehmite according to any of the aforementioned technical solutions, characterized in that the hydroxyl regulator is added before the static aging; or, is added during the static aging process; or, is added after a period of static aging and before the stirring aging; or, is added at the end of static aging and before the start of stirring aging; or a combination thereof, the hydroxyl regulator accounts for 0.5-2 % by weight of the first slurry calculated as alumina, for example, 0.7-1.8 % by weight; wherein the concentration of ammonia in the ammonia water is preferably 15-25 % by weight, for example, 20 % by weight.

A14. A method for preparing pseudo-boehmite according to any of the aforementioned technical solutions, characterized in that:

in step (2),
the conditions for static aging include: a temperature of 100 °C-185 °C, such as above 100 °C and not more than 185 °C, 120 °C-180 °C, 135 °C-180 °C, 120 °C-160 °C, or 135 °C-160 °C, a pressure of 0.2 MPa-1.0 MPa, and a time of 1-8 hours, such as 1-6 hours, or 2.5-6 hours;
the conditions for aging under stirring include: a temperature of 100 °C-185 °C, such as above 100 °C and not more than 185 °C, 120 °C-180 °C, 135 °C-180 °C, 120 °C-160 °C, or 135 °C-160 °C, a pressure of 0.2 MPa-1.0 MPa, a time of 1-6 hours, such as 1-4.5 hours, and a stirring speed of 50 rpm-450 rpm, such as 50 rpm-400 rpm, 60 rpm-400 rpm, 120 rpm-450 rpm, or 150 rpm-450 rpm;
preferably, the ratio of the static aging time to the aging time under stirring is (1-5):1, for example (1.1-3):1, (1.2-3):1, or (1.14-3):1.

A15. A method for preparing pseudo-boehmite according to any of the aforementioned technical solutions, characterized in that the washing conditions in step (3) are: washing with deionized water at 70 °C-100 °C, such as 75 °C-95 °C, until the pH value of the wet filter cake is 7-7.5; the drying in step (3) is performed at a drying temperature of 60 °C-98 °C, such as 70 °C-98 °C, or 70 °C-95 °C, and the drying time is not particularly limited, such as 1-10 hours, such as 3-4 hours.

A16. A use of the pseudo-boehmite according to any of the aforementioned technical solutions, which is used as a catalyst, carrier, and binder in the petroleum industry; as a carrier coating for automobile exhaust treatment catalysts in the automobile industry; as an additive for flame retardant materials in the fire protection field; as an ink-absorbing coating in high-grade inkjet printing paper in the papermaking industry; as a gas purification adsorbent, a defluoridation agent of drinking water, an industrial wastewater color and odor eliminator in the environmental protection industry; as a coating additive in the construction industry; and as a reinforcing agent in ceramic composite materials.

A17. A method for preparing a catalytic cracking catalyst, comprising:

the pseudo-boehmite according to any of the above technical solutions, molecular sieve, binder, clay and water are made into an acidic slurry (for example, the pH value of the acidic slurry is preferably 1.5-2.6), and spray-dried; the catalytic cracking catalyst has a most probable pore size of 3.5 nm-4 nm and 4.5 nm-10 nm (e.g., 5.1 nm-10 nm, or 5.1 nm-7.5 nm).

A18. A method for preparing a catalytic cracking catalyst according to any of the above technical solutions, characterized in that the method comprises:

the pseudo-boehmite according to any of the above technical solutions is slurried with water to form a pseudo-boehmite slurry, the solid content of which is preferably 5-25 % by weight, and hydrochloric acid is added, so that the mass ratio of HCl to the pseudo-boehmite calculated as alumina is preferably 0.037-0.104, and the concentration of hydrochloric acid can be 10-37 % by weight; the pseudo-boehmite slurry is mixed with a molecular sieve, a binder, clay and water to obtain a colloidal slurry, wherein the solid content of the colloidal slurry is preferably 20-40 % by weight, and spray-dried, and optionally washed and dried.

A19. A catalytic cracking catalyst comprising, 10% to 50% by weight of a molecular sieve on a dry basis, 10% to 40% by weight of pseudo-boehmite according to any of the foregoing technical solutions on alumina basis, 3% to 20% by weight of binder on oxide basis, and 10% to 80% by weight of clay on a dry basis, based on 100% by weight of the catalyst;

preferably, the catalytic cracking catalyst has a most probable pore size of 3.5 nm-4 nm and 4.5 nm-10 nm (e.g. 5.1 nm-10 nm, or 5.1 nm-7.5 nm) and/or the molecular sieve is, for example, one or more of a Y-type molecular sieve, a molecular sieve having an MFI structure, a non-zeolite molecular sieve, and a molecular sieve having a BEA structure.

A20. A catalytic cracking catalyst, comprising 10 wt%-50 wt% of a Y-type molecular sieve on a dry basis, 0-40 wt% of other molecular sieves on a dry basis, 10 wt%-40 wt% of pseudo-boehmite according to any of the above technical solutions on alumina basis, 3 wt%-20 wt% of a binder on an oxide basis, and 10 wt%-80 wt% of clay on a dry basis, based on 100 wt% of the catalyst;

preferably, the other molecular sieves are one or more of zeolite with a MFI structure, beta zeolite, and non-zeolite molecular sieves; more preferably, the other molecular sieves are one or more of HZSM-5, ZRP, and ZSP; and/or, preferably, the Y-type molecular sieve is one or more of REY, REHY, DASY, SOY, PSRY, HSY, and HRY

A21. A catalytic cracking process, comprising a step of contacting heavy oil with a catalytic cracking catalyst under FCC conditions, characterized in that the catalytic cracking catalyst is the catalytic cracking catalyst according to any of the aforementioned technical solutions or the catalytic cracking catalyst obtained by the method for preparing a catalytic cracking catalyst according to any of the aforementioned technical solutions; for example, the FCC conditions include: a reaction temperature of 480 °C-530 °C, a reaction time of 1-10 seconds, and a catalyst-oil ratio of 3-20:1 by weight.

**Technical Solution B**

B1. A method for preparing a catalytic cracking catalyst, comprising:
pseudo-boehmite rich in surface hydroxyl groups, molecular sieve, binder, clay and water are made into an acidic slurry, and then spray-dried; $I_{3000-3800}$ of the pseudo-boehmite rich in surface hydroxyl groups is 6.0 $cm^{-1} \cdot mg^{-1}$ -8.5 $cm^{-1} \cdot mg^{-1}$, $I_{3000-3800}$ represents the infrared absorption intensity of surface hydroxyl groups of the pseudo-boehmite within the infrared light wavelength range of 3000 $cm^{-1}$ -3800 $cm^{-1}$, and the calculation method of $I_{3000-3800}$ is the ratio of the area of the absorption peak of the sample within the range of 3000 $cm^{-1}$ -3800 $cm^{-1}$ to the mass of the sample; the most probable pore size of the pseudo-boehmite rich in surface hydroxyl groups is greater than 4.5 nm and not more than 12 nm, and the most probable pore size of the catalytic cracking catalyst is 3.5 nm-4 nm and 4.5 nm-10 nm.

B2. The method according to technical solution B1, characterized in that the pseudo-boehmite rich in surface hydroxyl groups has a most probable pore size of 4.8 nm-11 nm, for example, 5 nm-10 nm; the pH value of the acidic slurry is preferably 1.5-2.6;

in one embodiment, the crystalline size of the pseudo-boehmite rich in surface hydroxyl groups is $D_{(130)}$ = 4 nm-10 nm, preferably 5 nm-8.5 nm; $D_{(130)}/D_{(020)}$ is 1.0-1.5, preferably 1.1-1.3;
in one embodiment, the pseudo-boehmite rich in surface hydroxyl groups has a crystallinity of 85%-110%, preferably 88%-108%, a peptization index of 90%-100%, such as 93%-99%, and a pore volume of 0.3 $cm^3$/g-0.58 $cm^3$/g, such as 0.31 $cm^3$/g-0.52 $cm^3$/g.

B3. The method according to technical solution B1, characterized in that the method for preparing the pseudo-boehmite rich in surface hydroxyl groups comprises the following steps:

(1) a sodium aluminate solution is reacted with $CO_2$ to form a first slurry;
(2) the first slurry is aged under certain conditions, and a hydroxyl regulator is added during the aging process, wherein the hydroxyl regulator is urea and/or ammonia water, to obtain an aged slurry, wherein the aging temperature is above 100 °C and not more than 185 °C; preferably, the aging under the certain conditions is: first static aging, then aging under stirring;
(3) the aged slurry is filtered, washed and dried.

B4. The method according to technical solution B3, characterized in that, in step (1), the pH value at the end of the reaction of the sodium aluminate solution with $CO_2$ is 8.5-10.5, and the $Al_2O_3$ concentration of the sodium aluminate solution is 5 g/L-60 g/L;
in step (1), the conditions for the reaction of the sodium aluminate solution with $CO_2$ include: introducing a $CO_2$-containing gas having a $CO_2$ concentration of 20-100 % by volume, such as 40-80 % by volume, into the sodium aluminate solution for reaction, preferably, the reaction starting temperature is 10 °C-35 °C, and the reaction endpoint temperature is preferably 15 °C-55 °C.

B5. The method according to technical solution B3 or B4, characterized in that in step (2), the slurry aging temperature is 100 °C-185 °C, the aging pressure is 0.2 MPa-1 MPa, and the aging time is 2-10 hours.

B6. The method according to technical solution B3 or B5, characterized in that the static aging time in step (2) is 1-4 hours, for example 2-3 hours, and the aging time under stirring is 1-6 hours; the stirring speed of the stirring aging can be 50 r/min-400 r/min.

B7. The method according to any of technical solutions B3-B7, characterized in that the aging temperature is 120 °C-160 °C, and the aging is preferably a constant temperature aging.

B8. A method according to any of technical solutions B3-B8, characterized in that the hydroxyl regulator is added after a period of static aging and before the stirring aging, for example, is added during the static aging process or is added at the end of the static aging and before the start of stirring aging; the hydroxyl regulator accounts for 0.5-2 % by weight of the first slurry calculated as alumina; wherein the concentration of ammonia in the ammonia water is preferably 15-25 % by weight.

B9. The method according to technical solution B1, characterized in that the method for preparing the catalytic cracking catalyst comprises:

(1) the pseudo-boehmite rich in surface hydroxyl groups is slurried with water to form a pseudo-boehmite slurry, the solid content of which is preferably 5-25 % by weight, hydrochloric acid is added, so that the mass ratio of HCl to the pseudo-boehmite rich in surface hydroxyl groups calculated as alumina is preferably 0.037-0.104, and the concentration of hydrochloric acid can be 10-37 % by weight;
(2) the pseudo-boehmite slurry is mixed with a molecular sieve, a binder, clay and water to obtain a colloidal slurry, wherein the solid content of the colloidal slurry is preferably 20-40 % by weight, spray-dried, and optionally washed and dried.

B10. A catalytic cracking catalyst comprising, 10-50 wt% of a molecular sieve on a dry basis, 10-40 wt% of the pseudo-boehmite rich in surface hydroxyl groups on an alumina basis, 3-20 wt% of a binder on an oxide basis, and 10-80 wt% of clay on a dry basis.

B11. The catalytic cracking catalyst according to technical solution B10, characterized in that the most probable pore size of the catalytic cracking catalyst is 3.5 nm-4 nm and 4.5 nm-10 nm; the molecular sieve is, for example, one or more of a Y-type molecular sieve, a molecular sieve with an MFI structure, a non-zeolite molecular sieve and a molecular sieve with a BEA structure.

B12. A catalytic cracking process, comprising a step of contacting heavy oil with a catalytic cracking catalyst under FCC conditions, characterized in that the catalytic cracking catalyst is the catalytic cracking catalyst prepared by the method for preparing catalytic cracking catalyst according to any of technical solutions B1-B9 or the catalytic cracking catalyst according to any of technical solutions B10-B11; the FCC conditions are, for example: a reaction temperature of 480 °C-530 °C, a reaction time of 1-10 seconds, and a catalyst-oil ratio of 3-20:1 by weight.

**Technical Solution C**

C1. A mesoporous pseudo-boehmite rich in surface hydroxyl groups, wherein the pseudo-boehmite has a most probable pore size greater than 4.5 nm and not more than 12 nm, and $I_{3000-3800}$ is 6.0 $cm^{-1} \cdot mg^{-1}$-8.5 $cm^{-1} \cdot mg^{-1}$, wherein $I_{3000-3800}$ represents the infrared absorption intensity of the surface hydroxyl groups of the pseudo-boehmite within the infrared light wavelength range of 3000 $cm^{-1}$-3800 $cm^{-1}$, and the calculation method of $I_{3000-3800}$ is the ratio of the area of the absorption peak of the sample within the range of 3000 $cm^{-1}$-3800 $cm^{-1}$ to the mass of the sample.

C2. The pseudo-boehmite according to technical solution C1, characterized in that the pseudo-boehmite has a most probable pore size of preferably 4.8 nm-11 nm, for example 5 nm-10 nm.

C3. The pseudo-boehmite according to technical solution C1 or C2, characterized in that the crystalline size of the pseudo-boehmite is $D_{(130)}$ = 4 nm-10 nm, preferably 5 nm-8.5 nm; $D_{(130)}/D_{(020)}$ is 1.0-1.5, and preferably the $D_{(130)}/D_{(020)}$ of the pseudo-boehmite is 1.1-1.3.

C4. The pseudo-boehmite according to technical solution C1, C2 or C3, characterized in that the crystallinity of the pseudo-boehmite is 85%-110%; the crystallinity of the pseudo-boehmite is preferably 88%-108%; the peptization index of the pseudo-boehmite is 90%-100%, and the peptization index is, for example, 93%-99%; the pore volume of the pseudo-boehmite is 0.3 $cm^3/g$-0.58 $cm^3/g$, for example, 0.31 $cm^3/g$-0.52 $cm^3/g$.

C5. A method for preparing pseudo-boehmite, the method comprising the following steps of:

(1) a sodium aluminate solution is reacted with $CO_2$ to form a first slurry;
(2) the first slurry is aged under certain conditions, a hydroxyl regulator is added during the aging process, wherein the hydroxyl regulator is urea and/or ammonia water, to obtain an aged slurry, wherein the aging temperature is above 100 °C and not more than 185 °C; preferably, the aging under the certain conditions is: first static aging, then aging under stirring;
(3) the aged slurry is filtered, washed and dried.

C6. The method according to technical solution C5, characterized in that, in step (1), the pH value at the end of the reaction between the sodium aluminate solution with $CO_2$ is 8.5-10.5, and the $Al_2O_3$ concentration of the sodium aluminate solution is 5 g/L-60 g/L.

C7. The method according to technical solution C5 or C6, characterized in that in step (1), the conditions for the reaction of the sodium aluminate solution with $CO_2$ include: introducing a $CO_2$-containing gas with a $CO_2$ concentration of 20-100 % by volume into the sodium aluminate solution for reaction, wherein the reaction starting temperature is 10 °C-35 °C, and the reaction endpoint temperature is preferably 15 °C-55°C.

C8. The method according to technical solution C5, C6 or C7, characterized in that in step (2), the slurry aging temperature is 100 °C-185 °C, the aging pressure is 0.2 MPa-1 MPa, and the aging time is 2-10 hours.

C9. The method according to technical solution C5 or C8, characterized in that in step (2), the static aging time is 1-4 hours, such as 2-3 hours, and the aging time under stirring is 1-6 hours; the stirring speed of the stirring aging can be 50 r/min-400 r/min.

C10. The method according to technical solution C5, C6, C7, C8 or C9, characterized in that the aging temperature is 120 °C-160 °C, and the aging is preferably a constant temperature aging.

C11. The method according to any of technical solutions C5-C10, characterized in that the hydroxyl regulator is added after a period of static aging and before the stirring aging, for example, is added during the static aging process or is added at the end of the static aging and before the start of stirring aging; the hydroxyl regulator accounts for 0.5-2 % by weight of the first slurry calculated as alumina; wherein the concentration of ammonia in the ammonia water is preferably 15-25 % by weight.

C12. Use of the pseudo-boehmite according to any of technical solutions C1-C4 in catalyst preparation.

## Detailed Description

Herein, the pressures are gauge pressures unless otherwise specified.

Herein, the contents are values based on weight percentage unless otherwise specified.

Herein, sodium aluminate and sodium metaaluminate are synonymous and both refer to: $NaAlO_2$.

The present invention provides a pseudo-boehmite, wherein the pseudo-boehmite has a most probable pore size greater than 4.5 nm and not more than 12 nm; and/or $I_{3000-3800}$ is 6.0 $cm^{-1} \cdot mg^{-1}$ -8.5 $cm^{-1} \cdot mg^{-1}$, $I_{3000-3800}$ represents the infrared absorption intensity of the surface hydroxyl group of the pseudo-boehmite within the infrared light wavelength range of 3000 $cm^{-1}$ -3800 $cm^{-1}$, and the calculation method of $I_{3000-3800}$ is the ratio of the area (in $cm^{-1}$) of the absorption peak of the sample within the range of 3000 $cm^{-1}$-3800 $cm^{-1}$ to the mass of the sample (in mg).

Preferably, crystalline size $D_{(130)}$ of the pseudo-boehmite provided by the present invention is 4 nm-10 nm, for example, greater than 4 nm-10 nm, 4.5 nm-9 nm, 5 nm-8.5 nm, 5.1 nm-8.5 nm, 5.5 nm-8.5 nm, 6 nm-8.2 nm, or 5.0 nm-7.9 nm.

Preferably, the pseudo-boehmite provided by the present invention has a $D_{(130)}/D_{(020)}$ = 1.0-1.5, for example, 1.1-1.4, 1.2-1.35, 1.1-1.3, or 1.13-1.26. The pseudo-boehmite can maintain a relatively large most probable pore size after acidification.

$D_{(130)}$ represents the crystalline size of the crystal plane represented by the (130) peak (corresponding to $2\theta=38.3°$) in the XRD spectrum of pseudo-boehmite crystals.

$D_{(020)}$ represents the crystalline size of the crystal plane represented by the (020) peak (corresponding to $2\theta=14.1°$) in the XRD spectrum of pseudo-boehmite crystals.

The crystalline size D is measured by X-ray powder diffraction (XRD) and calculated according to the Scherrer formula $$D = \frac{K \times \lambda}{\beta \times \cos\theta}$$, wherein K=1.075, $\lambda$ is the wavelength of the anodic radiation $K\alpha 1$ spectral line, $\beta$ is the half-peak width (in radians) of the specific diffraction peak of pseudo-boehmite, and $\theta$ is the Bragg diffraction angle of the diffraction peak (in degrees); that is, $D_{(130)}$ represents the crystalline size of the sample perpendicular to the (130) crystal plane, $$D_{(130)} = \frac{K \times \lambda}{\beta_{130} \times \cos\theta}$$, $\beta_{130}$ is the half-peak width of the (130) diffraction peak of sample (corresponding to $2\theta$ = 38.3°); $D_{(020)}$ represents the crystalline size of the sample perpendicular to the (020) crystal plane, $$D_{(020)} = \frac{K \times \lambda}{\beta_{020} \times \cos\theta}$$, $\beta_{020}$ is the half-peak width of the (020) diffraction peak of sample (corresponding to $2\theta$ = 14.1°).

The pseudo-boehmite provided by the present invention has a most probable pore size greater than 4.5 nm and less than or equal to 12 nm, for example, 4.8 nm-11 nm, 5 nm-10 nm, 5.5 nm-9 nm, 6 nm-8.5 nm, 7 nm-9 nm, 5.2 nm-7.6 nm, or 5.2 nm-7.5 nm; the pore size refers to the diameter of the pore.

The pseudo-boehmite provided by the present invention has a crystallinity of 85%-110%, such as 88%-108%, 90%-105%, or 92%-103%.

The pseudo-boehmite provided by the present invention has a pore volume of 0.3 $cm^3/g$-0.58 $cm^3/g$, such as 0.31 $cm^3/g$-0.52 $cm^3/g$, 0.33 $cm^3/g$-0.5 $cm^3/g$, or 0.34 $cm^3/g$-0.46 $cm^3/g$.

The pseudo-boehmite provided by the present invention has an $I_{3000-3800}$ of 6.0 $cm^{-1} \cdot mg^{-1}$-8.5 $cm^{-1} \cdot mg^{-1}$, for example, 6.2 $cm^{-1} \cdot mg^{-1}$-8.3 $cm^{-1} \cdot mg^{-1}$.

The pseudo-boehmite provided by the present invention has a peptization index of 90%-100%, such as 93%-99%, or 94%-98%.

The present invention provides a method for preparing the pseudo-boehmite, which comprises the following steps:

(1) a sodium (meta)aluminate solution is reacted with $CO_2$ to form a first slurry; preferably, the molar ratio of the two, calculated as $NaAlO_2$ and $CO_2$, is in the range of 0.5 to 2 times, e.g., 0.833 to 1.2 times, or 0.9 to 1.1 times, of the theoretical equivalent ratio, i.e., if the theoretical equivalent ratio is 2:1, the actual molar ratio of the two is (1-4):1, e.g., (1.67-2.4):1, or (1.8-2.2): 1;

(2) the first slurry is aged under certain conditions, and a hydroxyl regulator is added during the aging process, wherein the hydroxyl regulator is ammonia water and/or a precursor capable of forming $NH_3$ such as urea, to obtain an aged slurry, referred to as a second slurry, wherein the aging temperature is 100 °C-185 °C, for example, above 100 °C and not more than 185 °C, 120 °C-180 °C, 135 °C-180 °C, 120 °C-160 °C, or 135 °C-160 °C; preferably, the aging under the certain conditions is: first static aging, then aging under stirring;

(3) the aged slurry is filtered, washed, and dried.

According to the method for preparing the pseudo-boehmite of the present invention, in step (1), the concentration of the sodium (meta)aluminate solution can be 5 g/L-60 g/L, such as 8 g/L-45 g/L, calculated as $Al_2O_3$.

The (meta)aluminate solution can be purchased commercially or prepared according to existing methods. In one embodiment, the method for preparing the sodium (meta)aluminate solution comprises: reacting aluminum hydroxide with alkali solution at a temperature of 90 °C-120 °C for 1-4 hours, and diluting it to an $Al_2O_3$ concentration of 5 g/L-60 g/L, such as 8 g/L-45 g/L. The alkali solution is, for example, a sodium hydroxide solution. The caustic ratio (molar ratio of sodium oxide to aluminum oxide) of the sodium (meta)aluminate solution is, for example, 1.0-3.2.

According to the method for preparing the pseudo-boehmite of the present invention, in step (1), the sodium (meta)aluminate solution is contacted with $CO_2$ for reaction, and a gas containing $CO_2$ can be introduced into the sodium (meta)aluminate solution for reaction, wherein the volume concentration of $CO_2$ in the gas containing $CO_2$ is 20-100 % by volume, for example, 40-100 % by volume, 30-90 % by volume, or 40-80 % by volume. The balance is an inert gas such as nitrogen.

According to the method for preparing the pseudo-boehmite of the present invention, in step (1), the pH value at the end of the reaction of the sodium (meta)aluminate solution with $CO_2$ is 8.5-10.5, for example 9.2-10.3.

According to the method for preparing the pseudo-boehmite of the present invention, in step (1), the reaction starting temperature can be 10 °C-35 °C, and the temperature at the end of the reaction can be 15 °C-55 °C.

According to the method for preparing the pseudo-boehmite of the present invention, in step (1), the sodium (meta)aluminate solution is contacted with $CO_2$ for reaction, and the reaction time of the sodium (meta)aluminate solution with $CO_2$ can be 20-70 minutes.

According to the method for preparing the pseudo-boehmite of the present invention, in step (1), the conditions for the reaction of the sodium (meta)aluminate solution with $CO_2$ may include: a reaction starting temperature of 10 °C-35 °C, a reaction endpoint temperature of 15 °C-55 °C, and a reaction time of 20-70 minutes. The pH value at the end of the reaction of the sodium (meta)aluminate solution with $CO_2$ is 8.5-10.5, such as 9.2-10.3; the sodium (meta)aluminate solution reacts with $CO_2$; and the sodium (meta)aluminate solution is contacted with a gas containing $CO_2$ for reaction, wherein the volume concentration of $CO_2$ in the gas containing $CO_2$ is 20-100 % by volume, such as 40-100 % by volume, 30-90 % by volume, or 40-80 % by volume. The balance is an inert gas such as nitrogen.

In step (2), the aging under certain conditions is preferably carried out in the following manner: first static aging, then aging under stirring. The pseudo-boehmite obtained by the method has a crystalline size $D_{(130)} = 4$ nm-10 nm, for example, greater than 4 nm to 10 nm, 4.5 nm-9 nm, 5 nm-8.5 nm, 5.1 nm-8.5 nm, 5.5 nm-8.5 nm, 6 nm-8.2 nm, or 5.0 nm-7.9 nm, $D_{(130)}/D_{(020)}$ is 1.0-1.5, for example, 1.1-1.4, 1.2-1.35, 1.1-1.3, or 1.13-1.26, and it can have a relatively high most probable pore size.

In step (2), the first slurry is aged under certain conditions. In one embodiment, the aging temperature is 100 °C-185 °C, for example, above 100 °C and not more than 185 °C, 120 °C-180 °C, 135 °C-180 °C, 120 °C-160 °C, or 135 °C-160 °C. The first slurry can be heated to 100 °C-185 °C, for example, above 100 °C and not more than 185 °C, 120 °C-180 °C, 135 °C-180 °C, 120 °C-160 °C, or 135 °C-160 °C, and then aged at this temperature. For example, the time taken for the first slurry to rise from the reaction endpoint temperature to the aging temperature is not more than 60 minutes. From the beginning of aging to the end of aging, the temperature can be kept at a constant temperature for a constant temperature aging. The constant temperature aging refers to controlling the temperature of static aging and stirring aging to be constant, for example, the temperature difference between static aging and stirring aging is preferably not more than 2 °C.

In step (2), the aging pressure can be 0.2 MPa-1.0 MPa.

In step (2), the stirring speed can be controlled to be 50 rpm-450 rpm, for example, 50 rpm-400 rpm, 60 rpm-400 rpm, 120 rpm-450 rpm, or 150 rpm-450 rpm. The stirring can be carried out by an existing stirring method. Through stirring, the aged slurry rotates in the aging kettle under the drive of the stirring blade.

In step (2), the aging time of the aging can be 2-11.5 hours, such as 2-10 hours, or 3.5-10.5 hours.

In step (2), the slurry is first aged at a certain temperature and then aged under stirring. In the static aging, stirring is not performed during aging, so that the slurry is in a static state, for example, it can be aged for a period of time. For example, the first slurry is first aged at an aging temperature for 1-8 hours, for example, 1-6 hours, or 2.5-6 hours, 1-4 hours, or 2-3 hours, and then stirred and aged at the aging temperature for 1-6 hours, for example, 1-4.5 hours. The stirring speed can be 50 rpm-450 rpm, for example, 50 rpm-400 rpm, 60 rpm-400 rpm, 120 rpm-450 rpm, or 150 rpm-450 rpm.

In step (2), in one embodiment, the first slurry is aged under certain conditions, the aging temperature is 100 °C-185 °C, for example, above 100 °C and not more than 185 °C, 120 °C-180 °C, 135 °C-180 °C, 120 °C-160 °C, or 135 °C-160 °C, the aging pressure is 0.2 MPa-1.0 MPa, and the aging is carried out at a constant temperature for 2-11.5 hours, for example, 2-10 hours, or 3.5-10.5 hours; wherein the first slurry is first allowed to stand for aging for 1-8 hours, for example, 1-6 hours, or 2.5-6 hours, 1-4 hours, or 2-3 hours, and then the aging temperature and aging pressure are maintained, stirring is applied, and the stirring speed is controlled to be 50 rpm-450 rpm, for example, 50 rpm-400 rpm, 60 rpm-400 rpm, 120 rpm-450 rpm, or 150 rpm-450 rpm, stirring aging time is 1-6 hours, such as 1-4.5 hours.

In step (2), a hydroxyl regulator is added, which can be ammonia water and/or a precursor capable of forming $NH_3$, such as urea, and the amount of the hydroxyl regulator added is 0.5-2 % by weight, such as 0.7-1.8 % by weight, of the alumina content in the pseudo-boehmite. The concentration of the ammonia water (calculated as $NH_3$) is 15-25 % by weight, such as 20 % by weight.

In one embodiment, the hydroxyl regulator is added after the reaction with $CO_2$ is stopped in step (1) and before the stirring aging. For example, the hydroxyl regulator is added before the static aging; or, during the static aging; or, after a period of static aging and before the stirring aging; or, at the end of the static aging and before the start of the stirring aging; or a combination thereof. Usually, the hydroxyl regulator is added after a period of static aging, for example, during the static aging, or at the end of static aging and before the start of the stirring aging.

Step (3), the aged slurry is filtered, washed and dried to obtain macroporous pseudo-boehmite rich in surface hydroxyl groups and having a specific most probable pore size distribution. In one embodiment, the washing conditions are: washing with deionized water at 70 °C-100 °C, such as 75 °C-95 °C, until the pH of the wet filter cake is 7-7.5. The drying temperature can be 60 °C-98 °C, such as 70 °C-98 °C, or 70 °C-95 °C; the drying time is not particularly limited, for example, 1-10 hours, such as 2-4 hours, or 3-4 hours.

After the static aging and then the stirring aging, pseudo-boehmite with specific crystal characteristics can be obtained, whose crystalline size $D_{(130)}$ is 4 nm-10 nm, for example, greater than 4 nm-10 nm, 4.5 nm-9 nm, 5 nm-8.5 nm, 5.1 nm-8.5 nm, 5.5 nm-8.5 nm, 6 nm-8.2 nm, or 5.0 nm-7.9 nm, $D_{(130)}/D_{(020)}$ =1.0-1.5, for example, 1.1-1.4, 1.2-1.35, 1.1-1.3, or 1.13-1.26.

The pseudo-boehmite provided by the present invention has abundant surface hydroxyl groups, a relatively large most probable pore size, a relatively high crystallinity and good peptization. The pseudo-boehmite provided by the present invention has good bonding performance and can be applied in catalytic cracking catalysts to reduce the coke selectivity of hydrocarbon oil conversion.

The preparation method of pseudo-boehmite provided by the present invention is green, environmentally friendly, low-cost, easy to implement, and fills the technical gap of producing pseudo-boehmite suitable for catalytic cracking catalyst by carbonization method. Pseudo-boehmite with better bonding performance and higher most probable pore size distribution can be obtained, and the pseudo-boehmite has high crystallinity, large crystalline size, specific crystal structure, and good peptization.

The pseudo-boehmite provided by the present invention can be used for catalyst preparation; after acidification, the obtained catalyst can have a larger most probable pore size and better strength. For example, when used for catalytic cracking catalyst preparation, it can be directly acidified without pore expansion treatment to obtain a catalytic cracking catalyst with a larger most probable pore size, for example, a most probable pore size greater than 5 nm and better wear resistance.

Compared with existing pseudo boehmite, the application of this pseudo boehmite in the preparation of catalytic cracking catalysts can provide more mesoporous structures and higher most probable pore sizes, and provide better catalyst strength (lower wear index). The resulting catalytic cracking catalyst has lower coke selectivity and better product distribution, for example, it can increase the yield of liquefied gas and gasoline.

The present invention also provides a method for preparing a catalytic cracking catalyst, comprising:

the pseudo-boehmite rich in surface hydroxyl groups of the present invention, molecular sieve, binder, clay and water are made into an acidic slurry, wherein the pH value of the slurry is preferably 1.5-2.6, and then spray-dried; $I_{3000-3800}$ of the pseudo-boehmite rich in surface hydroxyl groups is 6.0 $cm^{-1} \cdot mg^{-1}$-8.5 $cm^{-1} \cdot mg^{-1}$, for example, 6.2 $cm^{-1} \cdot mg^{-1}$-8.3 $cm^{-1} \cdot mg^{-1}$,

$I_{3000-3800}$ represents the infrared absorption intensity of the surface hydroxyl group of pseudo-boehmite in the infrared light wavelength range of 3000 $cm^{-1}$ -3800 $cm^{-1}$, and the calculation method of $I_{3000-3800}$ is the ratio of the area (in $cm^{-1}$) of the absorption peak of the sample in the range of 3000 $cm^{-1}$ -3800 $cm^{-1}$ to the mass of the sample (in mg), and the most probable pore size of the pseudo-boehmite rich in surface hydroxyl groups is greater than 4.5 nm and not more than 12 nm, such as 4.8 nm-11 nm, 5 nm-10 nm, 5.5 nm-9 nm, 6 nm-8.5 nm, 7 nm-9 nm, 5.2 nm-7.6 nm, or 5.2 nm-7.5 nm, and the most probable pore size of the catalytic cracking catalyst can be 3.5 nm-4 nm and 4.5 nm-10 nm (such as 5.1 nm-10 nm, or 5.1 nm-7.5 nm). Herein, the most probable pore size refers to the diameter of the pore.

In one embodiment, the pseudo-boehmite rich in surface hydroxyl groups has a crystallite size $D_{(130)}$ of 4 nm-10 nm, such as greater than 4 nm-10 nm, 4.5 nm-9 nm, 5 nm-8.5 nm, 5.1 nm-8.5 nm, 5.5 nm-8.5 nm, 6 nm-8.2 nm, or 5.0 nm-7.9 nm.

In one embodiment, the pseudo-boehmite rich in surface hydroxyl groups has a $D_{(130)}/D_{(020)}$ = 1.0-1.5, for example, 1.1-1.4, 1.2-1.35, 1.1-1.3, or 1.13-1.26.

$D_{(130)}$ represents the crystalline size of the crystal plane represented by the (130) peak (corresponding to $2\theta=38.3°$) in the XRD spectrum of pseudo-boehmite crystals.

$D_{(020)}$ represents the crystalline size of the crystal plane represented by the (020) peak (corresponding to $2\theta=14.1°$) in the XRD spectrum of pseudo-boehmite grains.

The crystalline size D was measured by X-ray powder diffraction (XRD) and calculated according to the Scherrer formula $D = \dfrac{K \times \lambda}{\beta \times \cos\theta}$, wherein K=1.075, $\lambda$ is the wavelength of the anodic radiation $K\alpha1$ spectral line, $\beta$ is the half-peak width (in radians) of the specific diffraction peak of pseudo-boehmite, and $\theta$ is the Bragg diffraction angle (in degrees) of the diffraction peak; that is, $D_{(130)}$ represents the crystalline size of the sample perpendicular to the (130) crystal plane, $D_{(130)} = \dfrac{K \times \lambda}{\beta_{130} \times \cos\theta}$, $\beta_{130}$ is the half-peak width of the (130) diffraction peak of sample (corresponding to $2\theta = 38.3°$); $D_{(020)}$ represents the crystalline size of the sample perpendicular to the (020) crystal plane, $D_{(020)} = \dfrac{K \times \lambda}{\beta_{020} \times \cos\theta}$, $\beta_{020}$ is the half-peak width of the (020) diffraction peak of sample (corresponding to $2\theta = 14.1°$).

In one embodiment, the pseudo-boehmite rich in surface hydroxyl groups has a crystallinity of 85%-110%, such as 88%-108%, 90%-105%, or 92%-103%.

In one embodiment, the pore volume of the pseudo-boehmite rich in surface hydroxyl groups is 0.3 cm$^3$/g-0.58 cm$^3$/g, such as 0.31 cm$^3$/g-0.52 cm$^3$/g, 0.33 cm$^3$/g-0.5 cm$^3$/g, or 0.34 cm$^3$/g-0.46 cm$^3$/g.

In one embodiment, the peptization index of the pseudo-boehmite rich in surface hydroxyl groups is 90%-100%, such as 93%-99%, or 94%-98%.

The pseudo-boehmite rich in surface hydroxyl groups of the present invention can maintain a relatively large pore size after acidification, which is beneficial to reducing the coke yield and improving the yield of gasoline and liquefied gas.

In one embodiment, the method for preparing the pseudo-boehmite rich in surface hydroxyl groups comprises the following steps:

(1) a sodium (meta)aluminate solution is reacted with $CO_2$ to form a first slurry; preferably, the molar ratio of the two, calculated as $NaAlO_2$ and $CO_2$, is in the range of 0.5 to 2 times, e.g., 0.833 to 1.2 times, or 0.9 to 1.1 times, of the theoretical equivalent ratio, i.e., if the theoretical equivalent ratio is 2:1, the actual molar ratio of the two is (1-4):1, e.g., (1.67-2.4):1, or (1.8-2.2): 1;

(2) the first slurry is aged under certain conditions, and a hydroxyl regulator is added during the aging process, wherein the hydroxyl regulator is ammonia water and/or a precursor capable of forming $NH_3$ such as urea, to obtain an aged slurry, referred to as a second slurry, wherein the aging temperature is 100 °C-185 °C, for example, above 100 °C and not more than 185 °C, 120 °C-180°C, 135 °C-180 °C, 120 °C-160 °C, or 135 °C-160 °C; preferably, the aging under the certain conditions: first static aging, then aging under stirring;

(3) the aged slurry is filtered, washed, and dried.

According to the method for preparing the pseudo-boehmite rich in surface hydroxyl groups of the present invention, in step (1), the concentration of the sodium (meta)aluminate solution can be 5 g/L-60 g/L, such as 8 g/L-45 g/L, calculated as $Al_2O_3$.

The sodium (meta)aluminate solution can be purchased commercially or prepared according to existing methods. In one embodiment, the method for preparing the sodium (meta)aluminate solution comprises: reacting aluminum hydroxide with alkali solution at a temperature of 90 °C-120 °C for 1-4 hours, and diluting to an $Al_2O_3$ concentration of 5 g/L-60 g/L, such as 8 g/L-45 g/L. The alkali solution is, for example, a sodium hydroxide solution. The caustic ratio (molar ratio of sodium oxide to aluminum oxide) of the sodium (meta)aluminate solution is, for example, 1.0-3.2.

According to the method for preparing the pseudo-boehmite rich in surface hydroxyl groups of the present invention, in step (1), the sodium (meta)aluminate solution is contacted with $CO_2$ for reaction, wherein a gas containing $CO_2$ can be introduced into the sodium (meta)aluminate solution to conduct reaction, and the volume concentration of $CO_2$ in the gas containing $CO_2$ is 20-100 % by volume, for example, 40-100 % by volume, 30-90 % by volume, or 40-80 % by volume. The balance is an inert gas such as nitrogen.

According to the method for preparing the pseudo-boehmite rich in surface hydroxyl groups of the present invention, the pH value at the end of the reaction between the sodium (meta)aluminate solution with $CO_2$ is 8.5-10.5, for example, 9.2-10.3.

According to the method for preparing the pseudo-boehmite rich in surface hydroxyl groups of the present invention, in step (1), the reaction starting temperature can be 10 °C-35 °C, and the temperature at the end of the reaction can be 15 °C-55 °C.

According to the method for preparing the pseudo-boehmite rich in surface hydroxyl groups of the present invention, in step (1), the sodium (meta)aluminate solution is contacted with $CO_2$ for reaction, wherein the reaction time of the sodium (meta)aluminate solution with $CO_2$ can be 20-70 minutes.

According to the method for preparing the pseudo-boehmite rich in surface hydroxyl groups of the present invention, in step (1), the conditions for the reaction of sodium (meta)aluminate solution with $CO_2$ may include: a reaction starting temperature of 10 °C-35 °C, a reaction endpoint temperature of 15 °C-55 °C, and a reaction time of 20-70 minutes. The pH value at the end of the reaction of the sodium (meta)aluminate solution with $CO_2$ is 8.5-10.5, for example, 9.2-10.3; the sodium (meta)aluminate solution is reacted with $CO_2$, wherein the sodium (meta)aluminate solution is contacted with a gas containing $CO_2$ for reaction, and the volume concentration of $CO_2$ in the gas containing $CO_2$ is 20-100 % by volume, for example, 40-100 % by volume, 30-90 % by volume, or 40-80 % by volume; the balance is an inert gas such as nitrogen.

According to the method for preparing the pseudo-boehmite rich in surface hydroxyl groups of the present invention, in step (2), the aging under certain conditions is: first static aging, then aging under stirring; the pseudo-boehmite obtained by the method has a crystalline size $D_{(130)} = 4$ nm-10 nm, for example, greater than 4 nm to 10 nm, 4.5 nm-9 nm, 5 nm-8.5 nm, 5.1 nm-8.5 nm, 5.5 nm-8.5 nm, 6 nm-8.2 nm, or 5.0 nm-7.9 nm, $D_{(130)}/D_{(020)}$ is 1.0-1.5, for example, 1.1-1.4, 1.2-1.35, 1.1-1.3, or 1.13-1.26, and it can have a higher most probable pore size. The catalyst prepared after acidification has a lower wear index and can obtain a larger most probable pore size of catalyst.

According to the method for preparing the pseudo-boehmite rich in surface hydroxyl groups of the present invention, in step (2), the first slurry is aged under certain conditions. In one embodiment, the aging temperature is 100 °C-185 °C, for example, above 100 °C and not more than 185 °C, 120 °C-180 °C, 135 °C-180 °C, 120 °C-160 °C, or 135 °C-160 °C. The first slurry can be heated to 100 °C-185 °C, for example, above 100 °C and not more than 185 °C, 120 °C-180 °C, 135 °C-180 °C, 120 °C-160 °C, or 135 °C-160 °C, and then aged at this temperature. For example, the time taken for the first slurry to rise from the reaction endpoint temperature to the aging temperature is not more than 60 minutes. From the beginning of aging to the end of aging, the temperature can be kept at a constant temperature for constant temperature aging. The constant temperature aging refers to controlling the temperature of static aging and stirring aging to remain unchanged, for example, the temperature difference between the static aging and the stirring aging is preferably not more than 2 °C.

According to the method for preparing the pseudo-boehmite rich in surface hydroxyl groups of the present invention, in step (2), the aging pressure can be 0.2 MPa-1.0 MPa.

According to the method for preparing the pseudo-boehmite rich in surface hydroxyl groups of the present invention, in step (2), the stirring speed can be controlled to be 50 rpm-450 rpm, for example, 50 rpm-400 rpm, 60 rpm-400 rpm, 120 rpm-450 rpm, or 150 rpm-450 rpm. The stirring can be carried out by an existing stirring method. Through stirring, the aged slurry rotates in the aging kettle under the drive of the stirring blade.

According to the method for preparing pseudo-boehmite rich in surface hydroxyl groups of the present invention, in step (2), the aging time of the aging can be 2-11.5 hours, such as 2-10 hours, or 3.5-10.5 hours.

According to the method for preparing the pseudo-boehmite rich in surface hydroxyl groups of the present invention, in step (2), the slurry is first aged at a certain temperature and then aged under stirring. In the static aging, stirring is not performed during aging, so that the slurry is in a static state, for example, it can be left to stand for a period of time for aging. For example, the first slurry is first aged at an aging temperature for 1-8 hours, for example, 1-6 hours, or 2.5-6 hours, 1-4 hours, or 2-3 hours, and then stirred and aged at the aging temperature for 1-6 hours, for example, 1-4.5 hours. The stirring speed can be 50 rpm-450 rpm, for example, 50 rpm-400 rpm, 60 rpm-400 rpm, 120 rpm -450 rpm, or 150 rpm -450 rpm.

According to the method for preparing the pseudo-boehmite rich in surface hydroxyl groups of the present invention, in step (2), in one embodiment, the first slurry is aged under certain conditions, wherein the aging temperature is 100 °C-185 °C, for example, above 100 °C and not more than 185 °C, 120 °C-180 °C, 135 °C-180 °C, 120 °C-160 °C, or 135 °C-160 °C, and the aging pressure is 0.2 MPa-1.0 MPa, and a constant temperature reaction of 2-11.5 hours, such as 2-10 hours, or 3.5-10.5 hours is conducted for aging; wherein the first slurry is first left to stand for aging for 1-8 hours, for example, 1-6 hours, or 2.5-6 hours, 1-4 hours, or 2-3 hours, and then the aging temperature and pressure are maintained, stirring is applied, and the stirring speed is controlled to be 50 rpm-450 rpm, for example, 50 rpm-400 rpm, 60 rpm-400 rpm, 120 rpm-450 rpm, or 150 rpm-450 rpm, stirring aging time is 1-6 hours, such as 1-4.5 hours.

According to the method for preparing the pseudo-boehmite rich in surface hydroxyl groups of the present invention, in step (2), a hydroxyl regulator is added, which can be ammonia water and/or a precursor capable of forming $NH_3$, such as urea, and the amount of the hydroxyl regulator added is 0.5-2 % by weight of the alumina in the slurry, such as 0.7-1.8 % by weight. The concentration of the ammonia water (calculated as $NH_3$) is 15-25 % by weight, such as 20 % by weight.

According to the method for preparing the pseudo-boehmite rich in surface hydroxyl groups of the present invention, in one embodiment, the hydroxyl regulator is added at the end of reaction with $CO_2$ in step (1) and before stirring aging. For example, the hydroxyl regulator is added before the static aging; or, during the static aging; or, it is added after a period of static aging and before the stirring aging; or, it is added at the end of static aging and before the start of stirring aging; or a combination thereof. Usually, the hydroxyl regulator is added after a period of static aging, for example, it is added during static aging or at the end of static aging and before the start of stirring aging.

According to the method for preparing the pseudo-boehmite rich in surface hydroxyl groups of the present invention, in step (3), the aged slurry is filtered, washed and dried to obtain macroporous pseudo-boehmite rich in surface hydroxyl groups and having specific most probable pore size distribution. In one embodiment, the washing conditions are: washing with deionized water at 70 °C-100 °C, such as 75 °C-95 °C, until the pH of the wet filter cake is 7-7.5. The drying temperature is preferably 60 °C-98 °C, such as 70 °C-98 °C, or 70 °C-95 °C; the drying time is not particularly limited, for example, 1-10 hours, such as 2-4 hours, or 3-4 hours.

The pseudo-boehmite obtained by the method for preparing the pseudo-boehmite rich in surface hydroxyl groups has abundant surface hydroxyl groups, a larger most probable pore size, a higher crystallinity, good peptization, and good bonding performance after acidification. After static aging and then stirring aging, a pseudo-boehmite rich in surface hydroxyl groups and having specific crystal characteristics can be obtained, and its crystalline size $D_{(130)}$ is 4 nm-10 nm, for example, greater than 4 nm to 10 nm, 4.5 nm-9 nm, 5 nm-8.5 nm, 5.1 nm-8.5 nm, 5.5 nm-8.5 nm, 6 nm-8.2 nm, or 5.0 nm-7.9 nm, $D_{(130)}/D_{(020)}$ = 1.0-1.5, for example, 1.1-1.4, 1.2-1.35, 1.1-1.3, or 1.13-1.26. The application of the pseudo-boehmite in a catalytic cracking catalyst can reduce the coke selectivity of hydrocarbon oil conversion and reduce the wear index of the catalytic cracking catalyst.

The method for preparing a catalytic cracking catalyst provided by the present invention comprises the following steps: forming a slurry comprising the pseudo-boehmite, molecular sieve, alumina binder, clay and water, spray drying the slurry, optionally washing, and drying. Spray drying, washing, and drying are existing technics, and the present invention has no special requirements. The catalyst can be prepared by referring to the existing methods, for example, according to the methods disclosed in patents CN1098130A and CN1362472A.

The catalytic cracking catalyst provided by the present invention contains, based on 100 wt% of the catalyst, 10 wt%-50 wt%, for example 20 wt%-45 wt% of molecular sieve on a dry basis, 10 wt%-40 wt%, for example 15 wt%-35 wt% of pseudo-boehmite rich in surface hydroxyl groups on alumina basis, 3 wt%-20 wt% of binder on an oxide basis, and 10 wt%-80 wt%, for example 20 wt%-50 wt% of clay on a dry basis.

The catalytic cracking catalyst provided by the present invention contains a molecular sieve, and the molecular sieve is, for example, one or more of a Y-type molecular sieve, a zeolite with MFI structure, a beta zeolite (also referred to herein as "a molecular sieve with a BEA structure"), or a non-zeolite molecular sieve. In one embodiment, the molecular sieve includes a Y-type molecular sieve and other molecular sieves other than the Y-type molecular sieve, and the content of the other molecular sieves on a dry basis is, for example, 0-40 % by weight, for example, 0-30 % by weight or 1-20 % by weight, based on 100% by weight of the catalyst. The other molecular sieves are selected from the molecular sieves used in the catalytic cracking catalyst, for example, one or more of a zeolite with an MFI structure, a beta zeolite, or a non-zeolite molecular sieve. For example, based on 100% by weight of the catalyst, the content of the Y-type molecular sieve on a dry basis is not more than 40 % by weight, for example, 1-40 % by weight or 30-38 % by weight. The Y-type molecular sieve is, for example, one or more of REY, REHY, DASY, SOY, PSRY, and HRY zeolites, the zeolite with MFI structure is, for example, one or more of HZSM-5, ZRP, and ZSP, the beta zeolite is, for example, Hβ, and the non-zeolite molecular sieve is, for example, one or more of aluminum phosphate molecular sieve (AlPO molecular sieve) and silicon aluminum phosphate molecular sieve (SAPO molecular sieve).

In the catalytic cracking catalyst provided by the present invention, the content of the pseudo-boehmite rich in surface hydroxyl groups is 10-40 % by weight, such as 15-35 % by weight, or 20-30 % by weight, calculated on a dry basis.

In the catalytic cracking catalyst provided by the present invention, the binder is preferably an alumina binder, and the content of the alumina binder is 3-20 % by weight, such as 5-15 % by weight, on alumina basis. As the alumina binder, alumina sol is preferred. For example, the catalytic cracking catalyst contains 3-20 % by weight, such as 5-15 % by weight, or 3-15 % by weight of aluminum sol, on alumina basis.

Preferably, the catalytic cracking catalyst has dual most probable pore sizes, and the dual most probable pore sizes are 3.5 nm-4 nm and 4.5 nm-10 nm (e.g., 5.1 nm-10 nm, or 5.1 nm-7.5 nm).

In the catalytic cracking catalyst provided by the present invention, the clay is selected from one or more of the clays used as cracking catalyst components, such as kaolin, polyhydrate kaolin, halloysite, montmorillonite, diatomite, saponite, rectorite, sepiolite, attapulgite, hydrotalcite, and bentonite. These clays are well known to those of ordinary skill in the art. Preferably, the content of the clay in the catalytic cracking catalyst provided by the present invention is 20-55 % by weight, or 30-50 % by weight, calculated on a dry basis.

The present invention further provides a catalytic cracking method, comprising the step of contacting and reacting heavy oil with the catalytic cracking catalyst prepared by the method for preparing catalytic cracking catalyst under FCC conditions. The FCC conditions are, for example: a reaction temperature of 480 °C-530 °C, a reaction time of 1-10 seconds, and a catalyst-oil weight ratio of (3-20): 1.

The method for preparing a catalytic cracking catalyst provided by the present invention uses the pseudo-boehmite rich in surface hydroxyl groups; after acidification treatment, the obtained catalytic cracking catalyst has a low wear index and better strength. In a preferred case, by using the pseudo-boehmite rich in surface hydroxyl groups and having specific crystal characteristics, the obtained catalytic cracking catalyst can have a pore structure greater than 5 nm, and the obtained catalytic cracking catalyst has a lower coke selectivity. In the case of using Y-type molecular sieve and ZSM-5 molecular sieve, it can have a better product distribution, for example, it can make the yield of liquefied gas and gasoline higher.

The method for preparing a catalytic cracking catalyst provided by the present invention is suitable for preparing a catalytic cracking catalyst containing pseudo-boehmite, wherein the catalytic cracking catalyst has most probable pore sizes of 3.5 nm-4 nm and 4.5 nm-10 nm (for example, 5.1 nm-10 nm, or 5.1 nm-7.5 nm); the catalyst can have better wear resistance when the utilization amounts of pseudo-boehmite and molecular sieve are the same; in particular in the case that the molecular sieve content is high, for example, higher than 35% by weight, the catalyst can significantly reduce the wear index compared with the existing catalyst of the same composition, and has a larger mesopore most probable pore size.

**Example**

The following examples will further illustrate the present invention but are not intended to limit the present invention.

Regarding the determination of performance parameters of pseudo-boehmite, one can refer to YS/T 1161 (Analysis method of pseudo-boehmite).

In this application, the crystallinity and crystalline size D of the sample are measured by X-ray powder diffraction (XRD) using RIPP139-90, RIPP140-90, RIPP145-90, and RIPP146-90 standard methods (see "Petrochemical Analysis Methods" (RIPP Test Methods) edited by Yang Cuiding et al., Science Press, published in 1990).

The crystallinity of pseudo-boehmite in the sample is calculated by measuring the integrated intensity of the sample and the standard sample S87-16b at $2\theta=38.3°$ (130 crystal plane) using the external standard method. The number of the standard sample is S87-16b, which is prepared by the Petrochemical Research Institute and is commercially available. After calibration, its pseudo-boehmite crystallinity is 98.0%. The crystallinity of the sample is calculated according to the following formula:

Crystallinity = Net integrated intensity of sample/Net integrated intensity of standard sample $\times$ 98.0

The crystalline size is calculated according to the Scherrer formula $D = \dfrac{K \times \lambda}{\beta \times \cos\theta}$, wherein $K = 1.075$, $\lambda$ is the wavelength of the anodic radiation $K\alpha 1$ spectral line, $\beta$ is the half-peak width of the specific diffraction peak of pseudo-boehmite, and $\theta$ is the Bragg diffraction angle of the diffraction peak. $D_{(130)}$ represents the crystalline size of the sample perpendicular to the (130) crystal plane, $D_{(130)} = \dfrac{K \times \lambda}{\beta_{130} \times \cos\theta}$, $\beta_{130}$ is the half-peak width of the (130) diffraction peak of the sample. $D_{(020)}$ represents the crystalline size of the sample perpendicular to the (020) crystal plane, $D_{(020)} = \dfrac{K \times \lambda}{\beta_{020} \times \cos\theta}$, $\beta_{020}$ is the half-peak width of the (020) diffraction peak of the sample.

In this application, the most probable pore distribution and pore volume (pore capacity) of the sample are determined by low temperature nitrogen static volume adsorption method, the specific surface area and pore volume are calculated by two-parameter BET formula, the pore size distribution is calculated by BJH formula, and the pore size corresponding to the highest point of the pore size distribution curve is the most probable pore size of the sample. Using ASAP 2405N V1.01 automatic adsorption instrument of Micromeritics Company of the United States, the sample is vacuum degassed at $1.33 \times 10^{-2}$ Pa and 300 °C for 4 hours, and $N_2$ is used as the adsorption medium, and the adsorption-desorption isotherm of the sample is measured at 77.4K.

In this application, the determination of the peptization index: weighing 10 grams of pseudo-boehmite, roasting it at 600 °C for 3 hours, placing it in a desiccator to cool, and after the temperature drops to room temperature, weighing WO grams to obtain a dry basis a0=WO/10, weighing the pseudo-boehmite weight m1=6/a0 grams, weighing m1 grams of pseudo-boehmite and placing it in a 100mL polytetrafluoroethylene cup, adding deionized water to 40 grams, stirring evenly with a magnetic rotor, then adding 20mL of 0.19N dilute nitric acid solution, stirring magnetically for 20 minutes, pouring all the solution into a centrifuge tube, putting it in a centrifuge, and centrifuging it at a speed of 1900 rpm for 20 minutes. Pouring out the upper colloidal solution, putting it in a weighed crucible, drying it at 80 °C, roasting it at 600 °C for 3 hours, placing it in a desiccator to cool, and after the temperature drops to room temperature, weighing it m2 grams, and the peptization index DI=(m2/6)*100%.

In the present application, the measurement method of $I_{3000-3800}$ is as follows: Fourier transform infrared spectrometer (e.g., Nicolet 6700 model produced by Thermo Fisher, USA) is used to measure the infrared absorption intensity of the surface hydroxyl group of the sample, and the test conditions are as follows: after the sample is fully ground, 10 mg-20 mg of the sample is taken and pressed into a self-supporting tablet. After accurate weighing, the sample is transferred to the sample holder of the in-situ cell and subjected to a vacuum treatment. The sample is purified for 2 hours under high vacuum conditions of $1.0 \times 10^{-3}$ Pa (absolute pressure) and a temperature of 450 °C. After the purification, it is cooled to room temperature, and then scanned at a resolution of 4.0 cm$^{-1}$ in the range of 400 cm$^{-1}$ -4000 cm$^{-1}$ to obtain the infrared absorption signal of hydroxyl. After data processing of the absorption signal, an infrared absorption spectrum of hydroxyl with wave number as the horizontal coordinate and absorbance as the vertical coordinate (absorbance: the logarithm to the base 10 of the ratio of the incident light intensity before the light passes through a substance to the transmitted light intensity after the light has passed through the substance (i.e., lg($I_0/I_1$)) is obtained, wherein $I_0$ is the incident light intensity and $I_1$ is the transmitted light intensity). The calculation method of $I_{3000-3800}$ is the ratio of the area (in cm$^{-1}$) of the infrared absorption peak of the hydroxyl group on the surface of pseudo-boehmite in the infrared light wavelength range of 3000 cm$^{-1}$ -3800 cm$^{-1}$ in the infrared absorption spectrum of hydroxyl to the mass of the sample (in mg).

The sodium metaaluminate used in the examples is produced by Shanghai MacLean Biochemical Technology Co., Ltd., with a caustic ratio of 1 and analytical grade.

Example 1

Sodium metaaluminate solution with a concentration of 20 g $Al_2O_3$/L was reacted with a carbon dioxide gas with a volume fraction of 40 % (wherein the volume fraction of carbon dioxide was 40 % and the balance being nitrogen) to form a gel, and the end point pH value was controlled to be 9.5. After the obtained slurry was transferred to an aging kettle, it was aged at 135 °C and 0.35 MPa for 3 hours, and 0.8% by weight (based on the weight of the slurry calculated by the mass of alumina) of urea was added; the temperature and pressure conditions were kept, stirring was started, and the stirring speed was maintained at 150 rpm, and aging was continued for 1 hour. After the aging was completed, the obtained slurry was separated into solid and liquid, and washed continuously with deionized water at 85 °C for half an hour until the pH value of the wet filter cake was 7.1, and a pseudo-boehmite wet filter cake with impurities removed was obtained. The wet filter cake was dried at 80 °C for 3 hours and crushed to obtain pseudo-boehmite powder S1; and its physical and chemical properties are shown in Table 1.

714.5 g of aluminum sol with an alumina content of 21 wt% was added to 1565.5 g of decationized water, stirring was started, and 2763 g of kaolin with a solid content of 76 wt% was added and dispersed for 60 minutes to obtain a dispersed kaolin slurry. 2049 g of S1 pseudo-boehmite with an alumina content of 61 wt% was added into 8146 g of decationized water, and 210 ml of hydrochloric acid with a mass concentration of 36% was added under stirring; after acidification for 60 minutes, the dispersed kaolin slurry was added hereinto, and then 1500 g (on a dry basis) of finely ground molecular sieves (HSY-12 molecular sieve and ZSP-3 molecular sieve, the weight ratio of HSY-12 molecular sieve to ZSP-3 molecular sieve was 14:1 on a dry basis; both were products of Sinopec Catalyst Qilu Branch; wherein HSY-12 molecular sieve has: $Re_2O_3$ content of 11.6 wt%, crystallinity of 50.3%, $Na_2O$ content of 0.9 wt%, Si/Al molar ratio of 2.5, finely ground particle size d(0.5)=2.6, d(0.9)=6.6); ZSP-3 molecular sieve has: $Fe_2O_3$ content of 1.7 wt%, $P_2O_5$ content of 3.9 wt%, crystallinity of 78%, $Na_2O$ content of 0.05 wt%, Si/Al molar ratio of 25, finely ground particle size d(0.5)=3.9, d(0.9) =7.8), the molecular sieves used in the following examples and comparative examples are the same) was added hereinto; after uniform stirring, it was spray-dried and washed, and dried to obtain a catalyst, which is recorded as SC1. Wherein, on a dry basis, the obtained SC1 catalyst contains 30 wt% of molecular sieve, 42 wt% of kaolin, 25 wt% of S1 pseudo-boehmite, and 3 wt% of aluminum sol.

Example 2

Sodium metaaluminate solution with a concentration of 45g $Al_2O_3$/L was contacted with a carbon dioxide gas with a volume fraction of 60% ($CO_2$ volume fraction of 60%, the balance being nitrogen) for reaction, and the end point pH value was controlled to be 10.3. After the obtained slurry was transferred to an aging kettle, it was statically aged at 180 °C and 1.0 MPa for 2.5 hours, and 1.5% (based on the mass of alumina in the slurry) of ammonia water (ammonia water concentration is 20 % by weight calculated as $NH_3$) was added hereinto, and then the temperature was maintained at 180 °C and the pressure was maintained at 1.0 MPa. The stirring was started and the stirring speed was maintained at 450 rpm, and the aging was continued for 1 hour. At the end of aging, the obtained slurry was separated into solid and liquid, and the solid was washed continuously with 95°C deionized water for half an hour until the pH value of the wet filter cake was 7.3, and the pseudo-boehmite wet filter cake with impurities removed was obtained. The wet filter cake was dried at 90 °C for 4 hours and crushed to obtain pseudo-boehmite powder S2; and its physical and chemical properties are shown in Table 1.

Referring to the preparation method of Example 1, Y molecular sieve, ZSP-3 molecular sieve, kaolin, water, S2 pseudo-boehmite binder and aluminum sol are formed into slurry according to the conventional preparation method of catalytic cracking catalyst, spray dried to prepare microsphere catalyst, and the prepared catalytic cracking catalyst is recorded as SC2. Wherein, calculated on a dry basis, the obtained SC2 catalyst contains 30 % by weight of molecular sieve (Y molecular sieve and ZSP-3 molecular sieve), 42 % by weight of kaolin, 25 % by weight of S2 pseudo-boehmite, and 3 % by weight of aluminum sol.

Example 3

Sodium metaaluminate solution with a concentration of 8 g $Al_2O_3$/L was contacted with a carbon dioxide gas with a volume fraction of 35% ($CO_2$ volume fraction of 35%, the balance being nitrogen) for reaction, and the end point pH value was controlled to be 9.2. After the obtained slurry was transferred to an aging kettle, 1.8% (based on the mass of alumina) of ammonia water (ammonia concentration was 20 % by weight calculated as $NH_3$) was added hereinto, stirred evenly, and then statically aged for 3.5 hours at 120 °C and 0.2 MPa, and then, under the conditions of a temperature of 120°C and pressure of 0.2 Mpa being maintained, stirring was started and a stirring speed of 120 rpm was maintained for aging of 2.5 hours. After the aging was completed, the obtained slurry was separated into solid and liquid, and the solid was washed continuously with 75 °C deionized water for half an hour until the pH value of the wet filter cake was 7.2, to obtain a pseudo-boehmite wet filter cake with impurities removed. The wet filter cake was dried at 75 °C for 4 hours and crushed to obtain pseudo-boehmite powder S3; the physical and chemical properties of which are shown in Table 1.

According to the method of Example 1, the catalyst was prepared by using S3 instead of S1 to obtain SC3.

Example 4

Sodium metaaluminate solution with a concentration of 15 g $Al_2O_3$/L was contacted with a carbon dioxide gas with a volume fraction of 50% ($CO_2$ volume fraction of 50%, the balance being nitrogen) for reaction, and the end point pH value was controlled to be 9.9. After the obtained slurry was transferred to an aging kettle, 1.8% (based on the mass of alumina in the slurry) of urea was added hereinto, and statically aged at 150 °C and 0.48 MPa for 4 hours, and then the conditions of temperature of 150 °C and pressure of 0.48 Mpa were maintained, the stirring was started and the stirring speed was maintained at 250 rpm for aging of 3 hours. At the end of aging, the obtained slurry was separated into solid and liquid, and solid was washed continuously with 80 °C deionized water for half an hour until the pH value of the wet filter cake was 7.2, to obtain a pseudo-boehmite wet filter cake with impurities removed. The wet filter cake was dried at 85 °C for 4 hours and crushed to obtain pseudo-boehmite powder S4; and its physical and chemical properties are shown in Table 1.

According to the method of Example 1, the catalyst was prepared by using S4 instead of S1 to obtain SC4.

Example 5

Sodium metaaluminate solution with a concentration of 55 g $Al_2O_3$/L was contacted with a carbon dioxide gas with a volume fraction of 90% (90% by volume of $CO_2$, the balance being nitrogen) for reaction, and the end point pH value was controlled to be 10.3. After the obtained slurry was transferred to an aging kettle, 0.7% (based on the mass of alumina) of ammonia water (the concentration of ammonia water was 20 % by weight calculated as $NH_3$) was added hereinto, and statically aged at 160 °C and 0.62 MPa for 6 hours, and the conditions of temperature of 160 °C and pressure of 0.62 MPa were maintained and the stirring was started, stirring speed was maintained at 350 rpm for aging of 4.5 hours. After the aging was completed, the obtained slurry was separated into solid and liquid, and the solid was washed continuously with 90 °C deionized water for half an hour until the pH value of the wet filter cake was 7.2, to obtain a pseudo-boehmite wet filter cake with impurities removed. The wet filter cake was dried at 95 °C for 4 hours and crushed to obtain pseudo-boehmite powder S5, the physical and chemical properties of which are shown in Table 1.

According to the method of Example 1, the catalyst was prepared by using S5 instead of S1 to obtain SC5.

Comparative Example 1

Sodium metaaluminate solution with a concentration of 20 g $Al_2O_3$/L was reacted with a carbon dioxide gas with a volume fraction of 40% to form a gel, and the end point pH value was controlled to be 9.5. The obtained slurry was transferred to an aging kettle and statically aged at 90 °C for 3 hours. After the aging, the obtained slurry was separated into solid and liquid, and the solid was washed with deionized water at 78 °C for half an hour to obtain a product filter cake with impurities removed, which was dried at 90 °C for 3 hours, and crushed to obtain pseudo-boehmite powder D1, the physical and chemical properties of which are shown in Table 1.

Molecular sieve (the same molecular sieve as used in Example 1), kaolin, water, D1 pseudo-boehmite binder and aluminum sol were formed into slurry according to a conventional method for preparing a catalytic cracking catalyst, and the slurry was spray-dried to prepare a microsphere catalyst. The prepared catalytic cracking catalyst was recorded as DC1 (refer to the preparation method in Example 1). The DC1 catalyst obtained contains 30 % by weight of molecular sieve, 42 % by weight of kaolin, 25 % by weight of D1 pseudo-boehmite and 3 % by weight of aluminum sol, calculated on a dry basis.

Comparative Example 2

Sodium metaaluminate solution with a concentration of 20 g $Al_2O_3$/L was reacted with a carbon dioxide gas with a volume fraction of 40% to form a gel, and the end point pH value was controlled to be 9.5. The obtained slurry was transferred to an aging kettle and aged at 135 °C and 0.35 MPa for 3.5 hours. After aging, the obtained slurry was separated into solid and liquid, and the solid was washed continuously with deionized water at 80 °C for half an hour to obtain a pseudo-boehmite wet filter cake with impurities removed. The wet filter cake was dried at 80 °C for 3 hours and crushed to obtain pseudo-boehmite powder D2; and its physical and chemical properties are shown in Table 1.

Molecular sieve, kaolin, water, D2 pseudo-boehmite binder and aluminum sol were formed into slurry according to a conventional method for preparing a catalytic cracking catalyst, and spray-dried to prepare a microsphere catalyst. The prepared catalytic cracking catalyst was recorded as DC2 (refer to the preparation method in Example 1). The DC2 catalyst contains 30 % by weight of molecular sieve, 42 % by weight of kaolin, 25 % by weight of D2 pseudo-boehmite and 3 % by weight of aluminum sol, calculated on a dry basis.

Comparative Example 3

A highly-pure sodium metaaluminate solution with an $Al_2O_3$ content of 45 g/L was used as the raw material, and a $CO_2$ with concentration of 40% was introduced for conducting gelation reaction. The flow rate per hour was controlled at 3.0 m³/h, the reaction time was controlled at 40 minutes, the $Al_2O_3$ residue was controlled at 5 g/l, and the final temperature was controlled at 35°C. After the reaction, the slurry was separated and washed, and the filter cake was washed with 85 °C highly-pure water until the pH value of the filter cake was 7.0. The filter cake prepared above was added into highly-pure water and stirred, and then urea with a concentration of 8 g/L was added hereinto. After stirring for 50 minutes, the slurry was moved into the autoclave equipment, the autoclave temperature was controlled at 150 °C, the pressure was 0.6 MPa, and it was aged for 3 hours. At the end of aging, it was washed continuously with 85 °C deionized water for half an hour, filtered and dried at 90 °C. The final product, pseudo-boehmite D3, was obtained by crushing, and its physical and chemical properties are shown in Table 1.

Molecular sieve, kaolin, water, D3 pseudo-boehmite binder and aluminum sol were formed into slurry according to the conventional preparation method of catalytic cracking catalyst, and spray-dried to prepare microsphere catalyst. The prepared catalytic cracking catalyst was recorded as DC3 (refer to the preparation method in Example 1). The DC3 catalyst obtained contains 30 % by weight of molecular sieve, 42 % by weight of kaolin, 25 % by weight of D3 pseudo-boehmite and 3 % by weight of aluminum sol, calculated on a dry basis.

Comparative Example 4

Sodium metaaluminate solution with a concentration of 45g $Al_2O_3$/L was contacted with a carbon dioxide gas with a volume fraction of 60% ($CO_2$ volume fraction of 60%, the balance being nitrogen) for reaction, and the end point pH value was controlled to be 10.3. The obtained slurry was transferred to an aging kettle, and the stirring was maintained at a stirring speed of 450 rpm at 180 °C and 1.0 MPa for aging of 3.5 hours. After the aging, the obtained slurry was separated into solid and liquid, and the solid was washed continuously with 95 °C deionized water for half an hour until the pH value of the wet filter cake was 7.3, to obtain a pseudo-boehmite wet filter cake with impurities removed. The wet filter cake was dried at 90 °C for 4 hours and crushed to obtain pseudo-boehmite powder D4, the physical and chemical properties of which are shown in Table 1.

Catalyst DC4 was prepared by referring to the method in Example 1 using D4 instead of S1.

Table 1 Properties of pseudo-boehmite

| | Example | | | | | Comparative Example | | | |
|---|---|---|---|---|---|---|---|---|---|
| | 1 | 2 | 3 | 4 | 5 | 1 | 2 | 3 | 4 |
| Sample No. | S1 | S2 | S3 | S4 | S5 | D1 | D2 | D3 | D4 |
| Crystallinity/% | 98 | 101 | 92 | 99 | 103 | 73 | 96 | 82 | 101 |
| $D_{(130)}$/nm | 6.5 | 7.5 | 5.0 | 6.2 | 7.9 | 3.8 | 6.5 | 5.1 | 5.3 |

(continued)

| | Example | | | | | Comparative Example | | | |
|---|---|---|---|---|---|---|---|---|---|
| | 1 | 2 | 3 | 4 | 5 | 1 | 2 | 3 | 4 |
| $D_{(130)}/D_{(020)}$ | 1.18 | 1.26 | 1.13 | 1.23 | 1.20 | 0.94 | 0.96 | 0.95 | 0.96 |
| Most probable pore size /nm | 7.2 | 7.6 | 5.2 | 6.3 | 7.5 | 3.8 | 4.3 | 4.5 | 4.5 |
| Pore volume/mL/g | 0.34 | 0.44 | 0.35 | 0.44 | 0.46 | 0.38 | 0.38 | 0.56 | 0.37 |
| Peptization index/% | 98 | 98 | 94 | 95 | 97 | 98 | 94 | 97 | 98 |
| Most probable pore size of calcined sample after acidification /nm* | 6.9 | 7.4 | 5.2 | 6.1 | 7.2 | 3.8 | 4 | 4.2 | 4.3 |
| $I_{3000-3800}/(cm^{-1} \cdot mg^{-1})$ | 7.8 | 6.4 | 7.5 | 8.3 | 6.2 | 5.5 | 5.4 | 5.8 | 5.7 |
| * Acidification conditions: acid-aluminum ratio (36 wt% HCl : $Al_2O_3$ mass ratio) was 0.2, solid content of the acidified mixture was 10 wt%; calcination temperature was 550 °C, and calcination time was 2 hours. | | | | | | | | | |

As can be seen from Table 1, the pseudo-boehmite provided by the present invention has abundant surface hydroxyl groups, larger most probable pore size, higher crystallinity, larger crystalline size, and larger $D_{(130)}/D_{(020)}$. The pseudo-boehmite has better peptization performance and the most probable pore size of the calcined sample after peptization is still larger.

Table 2

| Example No. | Sample No. | Most probable pore size of catalyst /nm | Wear index of catalyst /%·h⁻¹ |
|---|---|---|---|
| Example 1 | SC1 | 3.8, 7.1 | 1.1 |
| Example 2 | SC2 | 3.8, 7.5 | 1.3 |
| Example 3 | SC3 | 3.8, 5.1 | 1.1 |
| Example 4 | SC4 | 3.8, 6.3 | 0.9 |
| Example 5 | SC5 | 3.8, 7.4 | 1.2 |
| Comparative Example 1 | DC1 | 3.8 | 1.6 |
| Comparative Example 2 | DC2 | 3.8 | 1.6 |
| Comparative Example 3 | DC3 | 3.8, 4.3 | 2.4 |
| Comparative Example 4 | DC4 | 3.8, 4.5 | 2.5 |

As can be seen from Table 2, the catalytic cracking catalyst prepared from the pseudo-boehmite provided by the present invention has a lower wear index. The catalytic cracking catalyst prepared from the pseudo-boehmite provided by the present invention has a certain mesopore distribution at 5.1 nm-7.7 nm in addition to a pore distribution at 3.8nm. The catalyst prepared from conventional pseudo-boehmite has only mesopore distribution at 3.8 nm.

Examples 6-10

After aging the SC1-SC5 catalysts at 800°C for 17 hours with 100% steam, their catalytic cracking performances were evaluated in a small fixed fluidized bed reactor (ACE), and the cracked gas and product oil were collected and analyzed by gas chromatography. The catalyst loading was 9g, the reaction temperature was 500°C, and the weight hourly space velocity was 16 h⁻¹. The properties of the feedstock oil in the ACE experiment are shown in Table 3, and the evaluation results are shown in Table 4.

Comparative Examples 5-8

After aging DC1-DC4 catalysts with 100% steam at 800 °C for 17 hours, the catalytic cracking performances of DC1-DC4 catalysts were evaluated in a small fixed fluidized bed reactor (ACE). The properties of the feedstock oil in the ACE experiment are shown in Table 3, and the evaluation results are listed in Table 4.

Table 3

| name | Wu Hun San 2007 |
|---|---|
| Density (20°C)/(g.cm$^{-3}$) | 0.9104 |
| Viscosity (80°C)/(mm$^2$/s) | 19.24 |
| Viscosity (100°C)/(mm$^2$/s) | 11.23 |
| Condensation point/°C | 40 |
| Carbon residue value/wt% | 3.11 |
| Saturated hydrocarbons/wt% | 62.3 |
| Aromatics/wt% | 22.7 |
| Gum /wt% | 14.4 |
| Asphaltene/wt% | 0.6 |
| Element mass fraction/% | |
| C | 86.9 |
| H | 12.63 |
| S | 0.61 |
| N | 0.2 |
| Distillation range (D1160)/°C | |
| Initial distillation point | 267 |
| 5% | 318 |
| 10% | 339 |
| 30% | 407 |
| 50% | 451 |
| 70% | 494 |
| 81.5% | 540 |

Table 4

| | Example | | | | | Comparative Example | | | |
|---|---|---|---|---|---|---|---|---|---|
| | 6 | 7 | 8 | 9 | 10 | 5 | 6 | 7 | 8 |
| Sample No. | SC1 | SC2 | SC3 | SC4 | SC5 | DC1 | DC2 | DC3 | DC4 |
| Pseudo-boehmite | S1 | S2 | S3 | S4 | S5 | D1 | D2 | D3 | D4 |
| Catalyst to oil ratio | 4 | 4 | 4 | 4 | 4 | 4 | 4 | 4 | 4 |
| Product distribution/ wt% | | | | | | | | | |
| Dry gas | 3.26 | 3.42 | 3.31 | 3.36 | 3.29 | 3.48 | 3.63 | 3.76 | 3.74 |
| Liquefied gas | 27.16 | 27.35 | 26.82 | 27.02 | 27.28 | 26.36 | 26.54 | 26.46 | 26.43 |
| Coke | 2.54 | 2.84 | 3.05 | 2.97 | 2.63 | 3.37 | 3.84 | 3.54 | 3.67 |
| gasoline | 39.05 | 40.08 | 38.98 | 39.55 | 39.71 | 38.25 | 38.86 | 38.25 | 38.16 |
| Light cycle oil | 16.96 | 16.11 | 16.83 | 16.72 | 16.59 | 17.24 | 16.6 | 16.96 | 16.74 |
| heavy oil | 11.04 | 10.2 | 11.01 | 10.38 | 10.51 | 11.3 | 10.54 | 11.04 | 11.26 |

It can be seen from the results listed in Table 2 and Table 4 that the catalytic cracking catalyst provided by the present invention has a larger mesopore distribution, a significantly lower coke selectivity, and a significantly higher gasoline yield and liquefied gas yield.

## Claims

1.    A pseudo-boehmite, **characterized in that** the pseudo-boehmite has a most probable pore size greater than 4.5 nm and not more than 12 nm, such as 4.8 nm-11 nm, or 5 nm-10 nm.

2. The pseudo-boehmite according to any of the preceding claims, **characterized in that** $I_{3000-3800}$ of the pseudo-boehmite is 6.0 cm$^{-1}$•mg$^{-1}$-8.5 cm$^{-1}$•mg$^{-1}$, for example 6.2 cm$^{-1}$•mg$^{-1}$ -8.3 cm$^{-1}$•mg$^{-1}$, $I_{3000-3800}$ represents the infrared absorption intensity of the surface hydroxyl groups of the pseudo-boehmite in the infrared light wavelength range of 3000 cm$^{-1}$ -3800 cm$^{-1}$, and the calculation method of $I_{3000-3800}$ is the ratio of the area (in cm$^{-1}$) of the absorption peak of the sample in the range of 3000 cm$^{-1}$ -3800 cm$^{-1}$ to the mass (in mg) of the sample.

3. The pseudo-boehmite according to any of the preceding claims, **characterized in that** the ratio of the crystalline sizes $D_{(130)}$ and $D_{(020)}$ of the pseudo-boehmite is $D_{(130)}/D_{(020)}$ = 1.0-1.5, for example 1.1-1.3,
   wherein, the crystalline size D is measured by X-ray powder diffraction (XRD) and calculated according to the Scherrer formula $D = \dfrac{K \times \lambda}{\beta \times \cos\theta}$ , wherein K=1.075, $\lambda$ is the wavelength of the anodic radiation K$\alpha$1 spectral line, $\beta$ is the half-peak width (in radians) of the specific diffraction peak of pseudo-boehmite, and $\theta$ is the Bragg diffraction angle of the diffraction peak (in degrees), that is, $D_{(130)}$ represents the crystalline size of the sample perpendicular to the (130) crystal plane, $D_{(130)} = \dfrac{K \times \lambda}{\beta_{130} \times \cos\theta}$ , $\beta_{130}$ is the half-peak width of the (130) diffraction peak of sample (corresponding to 2$\theta$ = 38.3°); $D_{(020)}$ represents the crystalline size of the sample perpendicular to the (020) crystal plane, $D_{(020)} = \dfrac{K \times \lambda}{\beta_{020} \times \cos\theta}$ , $\beta_{020}$ is the half-peak width of the (020) diffraction peak of sample (corresponding to 2$\theta$ = 14.1°).

4. The pseudo-boehmite according to any of the preceding claims, **characterized in that** the pseudo-boehmite has the crystalline size $D_{(130)}$ = 4 nm-10 nm, for example 5 nm-8.5 nm.

5. The pseudo-boehmite according to any of the preceding claims, **characterized in that** the pseudo-boehmite has a crystallinity of 85 %-110%, such as 88%-108%.

6. The pseudo-boehmite according to any of the preceding claims, **characterized in that** the peptization index of the pseudo - boehmite is 90%-100%, such as 93%-99%.

7. The pseudo-boehmite according to any of the preceding claims, **characterized in that** the pore volume of the pseudo-boehmite is 0.3 cm$^3$/g - 0.58 cm$^3$/g, such as 0.31 cm$^3$/g - 0.52 cm$^3$/g.

8. A method for preparing pseudo-boehmite, the method comprises the following steps:

   (1) a sodium (meta)aluminate solution is reacted with $CO_2$ to form a first slurry;
   (2) the first slurry is aged under certain conditions, and a hydroxyl regulator is added during the aging process, wherein the hydroxyl regulator is ammonia water and/or a precursor capable of forming $NH_3$ such as urea, to obtain an aged slurry, wherein the aging temperature is above 100 °C and not more than 185 °C, such as 120 °C-180 °C, or 120 °C-160 °C; preferably, the aging under certain conditions is: first static aging, then aging under stirring;
   (3) the aged slurry is filtered, washed, and dried.

9. The method for preparing pseudo-boehmite according to any of the preceding claims, **characterized in that** in step (1), the pH value at the end of the reaction of the sodium (meta)aluminate solution with $CO_2$ is 8.5-10.5, such as 9.2-10.3, and the $Al_2O_3$ concentration of the sodium (meta)aluminate solution is 5 g/L-60 g/L, such as 8 g/L-45 g/L.

10. The method for preparing pseudo-boehmite according to any of the preceding claims, **characterized in that** in step (1), the conditions for the reaction of the sodium (meta)aluminate solution with $CO_2$ include: introducing a $CO_2$-containing gas with a $CO_2$ concentration of 20-100 % by volume, such as 30-90 % by volume (the balance is an inert gas such as nitrogen) into the sodium (meta)aluminate solution for reaction, the reaction starting temperature is 10 °C-35 °C, and the reaction endpoint temperature is 15 °C-55 °C.

11. The method for preparing pseudo-boehmite according to any of the preceding claims, **characterized in that** the slurry aging temperature in step (2) is above 100 °C and not more than 185 °C, such as 120 °C-180 °C, or 120 °C-160°C, the aging pressure is 0.2 MPa-1.0 MPa, and the aging time is 2-11.5 hours, such as 3.5-10.5 hours.

12. The method for preparing pseudo-boehmite according to any of the preceding claims, **characterized in that** in step (2), the static aging time is 1-8 hours, such as 1-6 hours, or 2.5-6 hours, and the aging time under stirring is 1-6 hours, such as 1-4.5 hours; the stirring speed of the stirring aging can be 50 rpm-450 rpm, such as 120 rpm-450 rpm; preferably, the aging is constant temperature aging.

13. The method for preparing pseudo-boehmite according to any of the preceding claims, **characterized in that** the aging temperature is 120 °C-180 °C, and the aging is preferably constant temperature aging.

14. The method for preparing pseudo-boehmite according to any of the preceding claims, **characterized in that** the hydroxyl regulator is added before the static aging; or, during the static aging; or, after a period of static aging and before the stirring aging; or, at the end of static aging and before the start of stirring aging; or a combination thereof; the hydroxyl regulator accounts for 0.5-2 % by weight of the first slurry calculated as alumina, for example, 0.7-1.8 % by weight; wherein the concentration of ammonia in the ammonia water is preferably 15-25 % by weight, for example, 20 % by weight.

15. The method for preparing pseudo-boehmite according to any of the preceding claims, **characterized in that**

in step (2),
the conditions of the static aging include: a temperature of above 100 °C and not more than 185 °C, such as 120 °C-180 °C, or 120 °C-160 °C, a pressure of 0.2 MPa-1.0 MPa, and a time of 1-8 hours, such as 2.5-6 hours; the conditions of the aging under stirring include: a temperature of above 100 °C and not more than 185 °C, such as 120 °C-180 °C, or 120 °C-160 °C, a pressure of 0.2 MPa-1.0 MPa, a time of 1-6 hours, such as 1-4.5 hours, and a stirring speed of 120 rpm-450 rpm;
preferably, the ratio of the time for the static aging to that for the aging under stirring is (1-5):1, for example (1.14-3):1.

16. The method for preparing pseudo-boehmite according to any of the preceding claims, **characterized in that** the washing conditions in step (3) are: washing with deionized water at 70 °C-100 °C until the pH value of the wet filter cake is 7-7.5; and the drying in step (3) is performed at a drying temperature of 60 °C-98 °C.

17. Use of the pseudo-boehmite according to any of the preceding claims, which is used as a catalyst, carrier, and binder in the petroleum industry; as a carrier coating for automobile exhaust treatment catalysts in the automobile industry; as an additive for flame retardant materials in the fire protection field; as an ink-absorbing coating in high-grade inkjet printing paper in the papermaking industry; as a gas purification adsorbent, drinking water defluoridation agent, industrial wastewater color and odor eliminator in the environmental protection industry; as a coating additive in the construction industry; and as a reinforcing agent in ceramic composite materials.

18. A method for preparing a catalytic cracking catalyst, comprising:

the pseudo-boehmite according to any of the preceding claims, molecular sieve, binder, clay and water are made into an acidic slurry (for example, the pH value of the acidic slurry is preferably 1.5-2.6), and spray-dried; the catalytic cracking catalyst has a most probable pore size of 3.5 nm-4 nm and 5.1 nm-10 nm.

19. The method for preparing a catalytic cracking catalyst according to any of the preceding claims, **characterized in that** the method comprises:

the pseudo-boehmite according to any of the preceding claims is slurried with water to form a pseudo-boehmite slurry, the solid content of which is preferably 5-25 % by weight, and hydrochloric acid is added, so that the mass ratio of HCl to the pseudo-boehmite calculated as alumina is preferably 0.037-0.104, and the concentration of hydrochloric acid can be 10-37 % by weight;
the pseudo-boehmite slurry is mixed with a molecular sieve, a binder, clay and water to obtain a colloidal slurry, wherein the solid content of the colloidal slurry is preferably 20-40 % by weight, and spray-dried, and optionally washed and dried.

20. A catalytic cracking catalyst comprising 10-50 wt% of a molecular sieve on a dry basis, 10-40 wt% of a pseudo-boehmite according to any of the preceding claims on an alumina basis, 3-20 wt% of a binder on an oxide basis, and 10-80 wt% of a clay on a dry basis, based on 100 wt% of the catalyst,

preferably, the catalytic cracking catalyst has a most probable pore size of 3.5 nm-4 nm and 5.1 nm-10 nm, and/or the molecular sieve is, for example, one or more of a Y-type molecular sieve, a molecular sieve with an MFI structure, a non-zeolite molecular sieve, and a molecular sieve with a BEA structure.

21. A catalytic cracking catalyst comprising 10-50 wt% of Y-type molecular sieve on a dry basis, 0-40 wt% of other molecular sieves on a dry basis, 10-40 wt% of pseudo-boehmite according to any of the preceding claims on alumina basis, 3-20 wt% of a binder on an oxide basis and 10-80 wt% of clay on a dry basis, based on 100 wt% of the catalyst;

preferably, the other molecular sieves are one or more of zeolite with a MFI structure, beta zeolite, and non-zeolite molecular sieves, more preferably, the other molecular sieves are one or more of HZSM-5, ZRP, and ZSP; and/or, preferably, the Y-type molecular sieve is one or more of REY, REHY, DASY, SOY, PSRY, HSY, and HRY.

22. A catalytic cracking method comprising a step of contacting heavy oil with a catalytic cracking catalyst under FCC conditions, **characterized in that** the catalytic cracking catalyst is the catalytic cracking catalyst according to any of the preceding claims or a catalytic cracking catalyst obtained according to the method for preparing a catalytic cracking catalyst according to any of the preceding claims; for example, the FCC conditions include: a reaction temperature of 480 °C-530 °C, a reaction time of 1-10 seconds, and a catalyst-oil ratio of 3-20:1 by weight.

## INTERNATIONAL SEARCH REPORT

| International application No. |
| --- |
| **PCT/CN2023/116100** |

| A. | CLASSIFICATION OF SUBJECT MATTER |
| --- | --- |

C01F7/02(2022.01)i; B01J29/80(2006.01)i; B01J29/08(2006.01)i

According to International Patent Classification (IPC) or to both national classification and IPC

| B. | FIELDS SEARCHED |
| --- | --- |

Minimum documentation searched (classification system followed by classification symbols)

C01F7/-; B01J29/-

Documentation searched other than minimum documentation to the extent that such documents are included in the fields searched

Electronic data base consulted during the international search (name of data base and, where practicable, search terms used)

CNTXT, VEN, ENTXTC, ENTXT, CNKI, ISI Web of Science: 拟薄水铝石, 水合氧化铝, 可几, 孔径, XRD, 晶粒, 结晶度, 胶溶指数, 铝酸钠, 二氧化碳, CO2, 氨水, 尿素, 老化, 搅拌, 静置, 沸石, 分子筛, 黏土, 粘土, pseudo boehmite, pore, hydrated alumina, grain, crystallinity, gel solubility index, sodium aluminate, carbon dioxide, ammonia, urea, aging, zeolite, clay

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114426300 A (CHINA PETROLEUM & CHEMICAL CORP. et al.) 03 May 2022 (2022-05-03) description, paragraph 8 | 1, 7, 17 |
| Y | CN 114426300 A (CHINA PETROLEUM & CHEMICAL CORP. et al.) 03 May 2022 (2022-05-03) description, paragraph 8 | 18-22 |
| X | CN 105174293 A (CHINA NATIONAL OFFSHORE OIL CORP. et al.) 23 December 2015 (2015-12-23) abstract, and claim 4 | 1, 17 |
| Y | CN 105174293 A (CHINA NATIONAL OFFSHORE OIL CORP. et al.) 23 December 2015 (2015-12-23) abstract, and claim 4 | 18-22 |
| Y | CN 103861636 A (BEIJING UNIVERSITY OF CHEMICAL TECHNOLOGY) 18 June 2014 (2014-06-18) embodiment 2 | 18-22 |

☑ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **07 November 2023** | **20 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/116100**

| C. | DOCUMENTS CONSIDERED TO BE RELEVANT | |
|---|---|---|
| Category* | Citation of document, with indication, where appropriate, of the relevant passages | Relevant to claim No. |
| A | JP 2011088136 A (PETROLEUM ENERGY CENTER et al.) 06 May 2011 (2011-05-06) entire document | 1-22 |

Form PCT/ISA/210 (second sheet) (July 2022)

24

## INTERNATIONAL SEARCH REPORT
### Information on patent family members

International application No.

**PCT/CN2023/116100**

| Patent document cited in search report | | | Publication date (day/month/year) | Patent family member(s) | | | Publication date (day/month/year) |
|---|---|---|---|---|---|---|---|
| CN | 114426300 | A | 03 May 2022 | None | | | |
| CN | 105174293 | A | 23 December 2015 | CN | 105174293 | B | 28 November 2017 |
| CN | 103861636 | A | 18 June 2014 | None | | | |
| JP | 2011088136 | A | 06 May 2011 | JP | 5445779 | B2 | 19 March 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1098130 A

- CN 1362472 A

**Non-patent literature cited in the description**

- Petrochemical Analysis Methods. RIPP Test Methods. Science Press, 1990